(19) Europäisches Patentamt / European Patent Office / Office européen des brevets

(11) **EP 2 754 159 B1**

(12) **EUROPÄISCHE PATENTSCHRIFT**

(45) Veröffentlichungstag und Bekanntmachung des Hinweises auf die Patenterteilung:
**02.01.2019   Patentblatt 2019/01**

(51) Int Cl.:
**H02K 33/16** (2006.01)   **H01F 7/16** (2006.01)
**H01F 7/18** (2006.01)

(21) Anmeldenummer: **12756120.7**

(22) Anmeldetag: **12.07.2012**

(86) Internationale Anmeldenummer:
**PCT/EP2012/063713**

(87) Internationale Veröffentlichungsnummer:
**WO 2013/034339 (14.03.2013 Gazette 2013/11)**

(54) **MAGNETVORRICHTUNG**

MAGNET DEVICE

DISPOSITIF MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2011   AT 12602011**

(43) Veröffentlichungstag der Anmeldung:
**16.07.2014   Patentblatt 2014/29**

(73) Patentinhaber: **SEH Limited**
**Birkirkara BKR 1501 (MT)**

(72) Erfinder:
• **HEIN, Jérémy**
**MC-98000 Monaco (MC)**

• **MARSCHNER VON HELMREICH, Martin**
**MC-98000 Monaco (MC)**

(74) Vertreter: **Ellmeyer, Wolfgang**
**Häupl & Ellmeyer KG**
**Patentanwaltskanzlei**
**Mariahilfer Strasse 50**
**1070 Wien (AT)**

(56) Entgegenhaltungen:
**WO-A1-2007/063222      DE-A1- 10 003 928**
**DE-A1- 10 207 828      DE-U1-202009 014 192**
**US-A1- 2004 005 222**

# EP 2 754 159 B1

**Beschreibung**

Diese Erfindung betrifft eine Magnetvorrichtung umfassend zumindest einen Stator und zumindest einen Translator, welcher Translator relativ zum Stator in einer Translator-Bewegungsrichtung entlang einer linearen Achse bewegbar ist, welche Translator-Bewegungsrichtung zum Stator gerichtet ist, wobei der zumindest eine Stator und der Translator entlang der Achse angeordnet sind.

Im Folgenden wird aus Gründen der Vereinfachung der Translator-Magnet kurz Translator, der Stator-Magnet als Stator bezeichnet. Die Anwendungsmöglichkeiten der erfindungsgemäßen Magnetvorrichtung liegen in der Verwendung als Magnetantrieb, als Generator oder als eine Widerstandsvorrichtung, welche eine Kraft gegen eine von außen auf die Widerstandsvorrichtung einwirkende Kraft erzeugt. Bei Verwendung als Magnetantrieb kann eine mechanische Arbeit über die Antriebsachse verrichtet werden.

Magnetantriebe nach dem Stand der Technik basieren auf dem Prinzip der Ausnutzung des magnetischen Dipols. Durch die Aktivierung von Abstoßungskräften und Anziehungskräften wird eine Bewegung eines Translator-Magneten relativ zu einem Stator-Magneten hervorgerufen. Diese Bewegung kann eine am Stator vorbei gerichtete, lineare oder rotative Bewegung des Translator-Magneten oder eine zum Stator-Magneten gerichtete, oszillierende Bewegung des Translator-Magneten sein. Magnetantriebe nach dem Stand der Technik, welche auf der letzteren Bewegung des Translator-Magneten beruhen, zeichnen sich dadurch aus, dass der Translator-Magnet zumindest in einer Endposition mit dem Stator-Magnet in Kontakt steht. Bei Magnetantrieben nach dem Stand der Technik wirken der Translator in seiner Endposition und der Stator als ein Magnet, sodass der Stator und der Translator nur durch einen hohen Energieaufwand getrennt werden können.

JP2006325381 offenbart eine Magnetvorrichtung mit zumindest einem Translator, welcher zwischen zumindest zwei Statoren bewegbar ist, wobei sich die Bewegungsachse des Translators durch die Statoren verlaufend erstreckt. Die Bewegung des Translators wird durch an den Statoren vorgesehenen Distanzelementen begrenzt. Die Distanzelemente dienen zur Reduktion von Geräuschen des Stromgenerators und von mechanischen Geräuschen hervorgerufen beispielsweise durch den Kontakt von Stator und Translator.

JP2006345652 beschreibt eine Vorrichtung zur Steuerung einer Bewegung einer durch einen Magneten geführten Nadel. Es findet sich kein Hinweis auf eine Steuerung der Bewegung der Nadel in Bezug auf den durch einen Magneten hervorgerufenen Kräftezustand.

US20060049701 zeigt eine Magnetvorrichtung, wobei die Bewegungsachse der Translatoren sich nicht durch die Statoren erstreckt. Die Translatoren werden seitlich an den Statoren vorbei bewegt, woraus sich ergibt, dass der sich zwischen Statoren und Translator ergebende Kräftezustand nicht parallel zu der Translator-Bewegungsrichtung orientiert ist. Ungeachtet des Fehlens eines Hinweises der Steuerung der Translator-Bewegung in Bezug auf den sich zwischen Translator und Stator ergebenden Kräftezustand, hat die in US20060049701 offenbarte Vorrichtung wegen der Ausrichtung des Kräftezustandes im Vergleich zu der Translator-Bewegung einen deutlich geringeren Wirkungsgrad als die im Folgenden diskutierte Vorrichtung.

JP2010104078 beschreibt eine Magnetvorrichtung, wobei die Translator-Bewegung durch ein Distanzstück gesteuert wird. Das Distanzstück weist eine Form auf, welche den zwischen Stator und Translator ergebenden Kräftezustand nicht durch seine Anwesenheit beeinträchtigt.

RO126256 betrifft eine Magnetvorrichtung, welche im Vergleich zu der im Folgenden diskutierten Magnetvorrichtung keine Steuervorrichtung zur Steuerung der Translator-Bewegung umfasst.

JP2002335662 offenbart eine Magnetvorrichtung, welche ebenfalls keine Steuervorrichtung zur Steuerung der Translator-Bewegung umfasst.

DE10003928 offenbart keine Steuervorrichtung zur Beabstandung von Stator und Translator in Abhängigkeit des zwischen dem Translator und dem Stator während des Betriebes der in DE10003928 beschriebenen Magnetvorrichtung. Es ist die spezielle Wirkung einer solchen Steuervorrichtung, nämlich die Wirkung von Stator und Translator stets als Einzelmagnete in DE10003928 weder implizit noch explizit beschreiben. Gemäß Offenbarung von DE10003928 ist der Abstand zwischen Stator und Translator so zu wählen, dass der Translator zum Stator gefangen ist. Dies widerspricht der im Folgenden aufgezeigten Lösung der Erfindung.

Es ist in Figur 1 von DE10003928 eine Beabstandung des Translators (in Figur 1 von DE10003928 Anker 8) zum Stator (in Figur 1 von DE10003928 Elektromagnet 6) erkennbar. Die Beabstandung wird durch ein Distanzelement hergestellt, welches in keiner der Figuren 1 und 3 von DE10003928 mit einem Bezugszeichen versehen ist.

Figur 2 von DE10003928 veranschaulicht den sich zwischen Stator und Translator ergebenden Kräftezustand. In der Figurenbeschreibung zu Figur 2 von DE10003928 ist angeführt, dass in Figur 2 mit dem Bezugszeichen 36 versehenen Bereiche gut regelbar sind, da die auf den Translator wirkende Summe von Anziehungskraft zum weiter entfernten Stator und von Federkraft größer ist als die einer Bewegung entgegenwirkenden Kräfte (in Figur 2 von DE10003928 mit den Bezugszeichen 39, 40 versehen).

Es findet sich in der Beschreibung kein Zusammenhang zwischen dem oben erwähnten, in Figur 1 von DE10003928 ersichtlichen Distanzelement und dem in der Figurenbeschreibung zu Figur 2 von DE10003928 diskutierten Kraftverlauf. Eine Steuerung der Distanz mittels des in Figur 1 ersichtlichen Distanzelement in Bezug auf den sich zwischen Translator und Stator ergebende Kraftzustand kann somit aus DE10003928 nicht abgeleitet werden.

DE10207828A1 beschreibt in Anspruch 1 einen senkrecht zu seiner Bewegungsrichtung (in Figur 1 von D2 mit dem Bezugszeichen 41 versehen) orientierten Anker (in DE10207828A1 mit dem Bezugszeichen 41 versehen). Der in DE10207828A1 erwähnte Anker wirkt als Translator in der in DE10207828A1 offenbarten Magnetvorrichtung.

Es findet sich in DE10207828A1 in Absatz [0042] der Hinweis auf die Verwendung von Distanzelementen zur Verringerung der Haltekraft des Hubmagneten zu minimieren. Aus Figur 1 ist ersichtlich, dass die Distanzelemente (in Figur 1 von DE10207828A1 mit den Bezugszeichen 45, 46 versehen) zwischen Translator und Stator angeordnet sind und durch ihre Präsenz die Haltekraft reduzieren.

DE10207828A1 offenbart keine Anleitung zur Beabstandung von Translator und Stator in der Form, dass diese als Einzelmagnete wirken, somit keine Haltekraft zwischen dem Translator und dem Stator wirkt.

Es ist in Figur 1 von WO2007063222A1 ein eine Höhe h aufweisendes Distanzelement ersichtlich. In der zu Figur 1 von WO2007063222A1 gehörenden Figurenbeschreibung auf Seite 7, letzter Absatz ist der Effekt des Distanzelementes, nämlich die Erhöhung der Lebenszeit der Magnetvorrichtung angeführt. Im nachfolgenden Absatz auf Seite 3 ist der Ausgleich von Ungenauigkeiten als Zweck des Distanzelementes angegeben. Es findet sich in WO2007063222A1 kein Hinweis auf eine Wirkung des Distanzelementes zur Wahrung der Wirkung von Stator und Translator als Einzelmagnete.

In Figur 1 von DE202009014192U1 ist gezeigt, dass die Polscheiben (in Figur 1 von D4 mit dem Bezugszeichen 14,16 versehen) des Translators die Jocheinheit des Stators (in Figur 1 von DE202009014192U1 mit dem Bezugszeichen 26 versehen) kontaktiert. Der sich ergebende Magnetfluss ist in Figur 4 von DE202009014192U1 dargestellt. Aus Figur 4 von DE202009014192U1 ist ersichtlich, dass Translator und Stator einander kontaktieren, somit keinen Abstand r>0 zueinander aufweisen.

US20040005222 offenbart ein Schaltschema für eine Steuervorrichtung. Es findet sich in US20040005222 kein Hinweis auf eine Beabstandung von Stator und Translator, sodass Stator und Translator stets bei Betrieb der Magnetvorrichtung als Einzelmagnete wirken.

Die Erfindung stellt sich die Aufgabe, eine Magnetvorrichtung, insbesondere einen Magnetantrieb, einen Generator oder ein Widerstandselement bereitzustellen, welche sich durch einen höheren Wirkungsgrad als die nach dem Stand der Technik bekannten Elektromagnetmotoren auszeichnen.

Erfindungsgemäß wird ein hoher Wirkungsgrad der Magnetvorrichtung dadurch erreicht, dass die Magnetvorrichtung eine Steuervorrichtung umfasst, welche Steuervorrichtung eine Vorrichtung zur Steuerung eines einstellbaren Abstandes r>0 des Translators zum Stator bei Betrieb der Magnetvorrichtung in Bezug auf den sich zwischen Stator und Translator ergebenden Kräftezustand zur Wahrung der Wirkung des Stators und des Translators als einzelne Magnete umfasst, wobei ein minimaler Abstand $r_{min}$>0 durch eine Steuereinheit unter Bezugnahme auf den sich zwischen dem Stator und dem Translator einstellenden Kräftezustandes gesteuert wird, sodass ein auf den Translator wirkender, resultierender Kraftzustand bei einer Position $X_t$ des Translators ein Maximum ist, wobei für den auf den Translator wirkenden Kräftezustand unter Annahme einer zylindrischen Geometrie folgende Beziehung gilt:

$$F_{repulsion}(X_t) = \frac{\mu_0}{4\pi}\left\{\left\{\frac{q_{s1a}(X_t)q_{tb}(X_t)}{\left(X_t + \frac{L_s + L_t}{2}\right)^2} + \frac{q_{s1b}(X_t)q_{ta}(X_t)}{\left(X_t - \frac{L_s + L_t}{2}\right)^2}\right\} - \left\{\frac{+q_{s1a}(X_t)q_{ta}(X_t)}{\left(X_t + \frac{L_s - L_t}{2}\right)^2} + \frac{q_{s1b}(X_t)q_{tb}(X_t)}{\left(X_t + \frac{L_t - L_s}{2}\right)^2}\right\}\right\}$$

mit

- $q_{s1a}(X_t)$ und $q_{s1b}(X_t)$ als die magnetische Polstärke der Statoren,
- $q_{ta}(Xt)$ und $q_{tb}(X_t)$ als die magnetische Polstärke des Translators,
- $X_t \in \,]\,\frac{L_s + L_t}{2}\,;\,\delta + \frac{L_s + L_t}{2}\,[$ als die Position $X_t$ des Translators,
- $\delta = d - L_s - L_t$ als die Translatorwegstrecke mit $d$ als die Distanz zwischen den Zentren der Statoren,
- $L_s$ als die Länge der Statoren in Richtung der linearen Achse,
- $L_t$ als die Länge des Translators in Richtung der linearen Achse.

Durch die erfindungsgemäße Beabstandung von Translator und Stator mit einem minimalen Abstand $r_{min}>0$ wird vermieden, dass Translator und Stator als ein Magnet wirken.

Der Abstand r ist im Rahmen der Offenbarung dieser Erfindung definiert als der Abstand zwischen der dem Stator zugewandten Oberfläche des Translators und der dem Translator zugewandten Oberfläche des Stators.

Der Stator und der Translator können einen Magnetteil und eine den Magnetteil umhüllende Schicht oder ein einen Kontakt der Magnetteile von Stator und Translator unterbindendes Distanzstück umfassen, sodass im Falle dieser Ausbildung des Stators oder des Translators bei einem Abstand r=0 der Stator und der Translator, jedoch nicht die Magnetteile des Stators und des Translators kontaktieren.

Der Abstand r kann durch die Steuervorrichtung weiters in Abhängigkeit der temporären Eigenschaften der Magnete gesetzt werden. Die temporären Eigenschaften der Magnete können sich einerseits durch externe Einflüsse wie Wärmebelastung verändern, andererseits durch weitere Steuervorrichtungen gesteuert werden. Beispielsweise sind die Feldstärke eines Magnetfeldes sowie die Ausrichtung des Magneten durch Methoden nach dem Stand der Technik steuerbar. Weiters haben unter Verweis auf die gängige Lehre die Materialwahl sowie die Kombination von Materialien einen Einfluss auf die Eigenschaften eines Magneten.

Die von der erfindungsgemäßen Magnetvorrichtung umfasste Steuervorrichtung kann den Abstand r in Bezugnahme auf die oben erwähnten Einflüsse und Eigenschaften der Magnete des zumindest einen Stators oder des zumindest einen Translators steuern.

Bei einer Versuchsanlage betrug der minimale Abstand $r_{min}$ 1,0mm bis 2,0mm. Die Versuchsanlage ist so konfigurierbar, dass der Abstand stufenlos einstellbar ist, sodass Versuche mit jedem Abstand im Bereich von 1,0 bis 2,0 mm durchgeführt wurden.

Die Achse, entlang welcher der Translator und der Stator angeordnet sind, kann eine polygonale, eine in Teilbereichen gekrümmte oder eine in anderen Teilbereichen gerade verlaufende Form aufweisen.

Bei einem auch nur kurzzeitigen Kontakt oder bei hinreichend kleiner Annäherung zueinander von Stator und Translator würden diese nach gängiger Lehre als ein Magnet wirken, sodass - um eine oszillierende Bewegung des Translators zu ermöglichen - dieser durch eine zusätzliche Trennungsenergie getrennt werden muss. Es ist auch Aufgabe der hier offenbarten Erfindung, eine Magnetvorrichtung bereitzustellen, welche sich dadurch auszeichnet, dass Stator und Translator bei Betrieb der erfindungsgemäßen Magnetvorrichtung nie in Kontakt miteinander treten und somit - unter Bezugnahme auf die gängige Lehre - zu keinem Zeitpunkt des Gebrauches der Magnetvorrichtung als ein Magnet wirken. Dies erlaubt einen Betrieb ohne diese zusätzliche Trennungsenergie bei Bewegung des Translators in Richtung vom Stator weg.

Die Erfindung schließt nicht aus, dass der Translator und der Stator bei Nicht-Gebrauch der erfindungsgemäßen Magnetvorrichtung in Kontakt zueinander stehen.

Die Magnetvorrichtung ausgebildet als ein Magnetantrieb kann mit einer bei Gebrauch des Magnetantriebes in Bewegung zu versetzenden Schwungmasse gekoppelt sein, welche eine unterschiedliche Beschleunigung des Translators auf der Translatorwegstrecke ausgleicht. Es ist hier ein Schwungrad nach dem Stand der Technik beispielhaft erwähnt.

Die erfindungsgemäße Magnetvorrichtung umfasst zumindest einen Stator und einen relativ zum Stator beweglichen Translator. Eine Ausführungsform der erfindungsgemäßen Magnetvorrichtung mit einem hohen Wirkungsgrad umfasst zwei Statoren und einen zwischen den Statoren beweglich gelagerten Translator. Im Sinne einer Aneinanderreihung von Antrieben kann der erfindungsgemäße Magnetantrieb eine Vielzahl n=1,2,3,... von Statoren und n-1 zwischen den Statoren beweglich gelagerten Translatoren umfassen.

Eine mögliche Ausführungsform der erfindungsgemäßen Magnetvorrichtung kann sein, dass zumindest ein Stator, vorzugsweise zwei Statoren in beispielsweise einem Mittelpunkt der Achse und zumindest ein Translator, vorzugsweise zwei Translatoren auf der Achse an beiden Seiten des Stators angeordnet sind.

Eine erfindungsgemäße Magnetvorrichtung kann in Kombination mit einer weiteren erfindungsgemäßen Magnetvorrichtung und/oder in Kombination mit einer Magnetvorrichtung nach dem Stand der Technik stehen.

Die Bewegung des Translators relativ zum Stator kann eine oszillierende Bewegung sein.

Die oszillierende Bewegung des Translators ist stets relativ zu einem Stator. Die Bewegung des Translators unter Ausnutzung der durch das zwischen Stator und Translator wirkende magnetische Dipol hervorgerufene Anziehungskraft und Abstoßkraft hervorgerufen werden.

Eine Verwendung der erfindungsgemäßen Magnetvorrichtung als Magnetantrieb kann sich dadurch auszeichnen, dass der Translator oszillierend bewegt wird.

Weiters kann die oszillierende Bewegung des Translators durch ein mechanisches Zwangssystem bewerkstelligt werden. Durch eine Koppelung des Translators mit einem mechanischen Zwangssystem wie beispielsweise einem Kurbeltrieb können die Amplituden der oszillierenden Bewegung des Translators begrenzt werden.

Das mechanische Zwangssystem kann die unterschiedlichen oder die gleichen Magnetfeldstärken und den Einfluss dieser auf die Bewegung des Translators ausgleichen. Die im Folgenden beschriebene Erfindung basiert auf Versuchen mit einer Versuchsanlage, welche mit Magneten mit unterschiedlichen Feldstärken oder mit Magneten mit gleichen Feldstärken betrieben wurde. Es konnten gute Erfahrungen bei einem Betrieb der Versuchsanlage mittels Magneten mit gleichen Feldstärken erzielt werden.

Das mechanische Zwangssystem kann eine weitere Bewegung des Translators in einer Endposition erzwingen und den Translator so aus dem Magnetfeld des nächst liegenden Stators entgegen der zwischen einem Stator und dem Translator wirkenden Anziehungskräfte sowie der zwischen einem Stator und dem Translator wirkenden Abstoßungskräfte lösen.

Bei Gebrauch der erfindungsgemäßen Magnetvorrichtung als Widerstandselement verharrt der Translator in einem definierten Abstand zu Stand über eine definierte Zeitspanne.

Die folgende Diskussion beschäftigt sich mit der Entstehung einer magnetischen Polarisierung oder Magnetisierung eines Materials aufgrund des Magnetfeldes H, das ein zusätzliches magnetisches Feld J bewirkt. Weiters wird jene Distanz des Translators zum Stator in der Endposition der Bewegung des Translators abgeleitet, in welcher Position die Anziehungskraft beziehungsweise die Abstoßungskraft zwischen Stator und Translator maximal ist.

Die im Folgenden getroffenen Vereinfachungen sollen den Schutzumfang keinesfalls beschränken, sondern wurden ausschließlich durchgeführt, um die hier diskutierte Materie besser verständlich zu machen.

Im Folgenden wird ein Magnetantrieb betrachtet, welcher zwei an einer Achse angeordnete Statoren und einen zwischen den Statoren, entlang der Achse bewegbaren Translator umfasst. Die Statoren und der Translator können um diese Achse als rotationssymmetrische Körper ausgebildet sein.

Unter der magnetischen Anregung durch das Feld H wird der ferromagnetische Kern magnetisiert und bewirkt ein zusätzliches Magnetfeld M. Die Magnetfelder M und H resultieren in dem Magnetfeld B, wobei sämtliche Magnetfelder in der Gleichung in einen Zusammenhang gebracht sind.

Ein magnetisches Feld, Magnetisierung und eine magnetische Induktion können im Allgemeinen durch die Gleichung 1 ausgedrückt werden.

$$B = \mu_0 H + J \;,$$

Gleichung 1

wobei für J gilt

$$J = \mu_0 M \;.$$

Gleichung 2

Durch Zusammenschau von Gleichung 1 und Gleichung 2 ergibt sich

$$B = \mu_0 (H + M) \;.$$

Gleichung 3

Die volumetrische magnetische Suszeptibilität ist durch die folgende Beziehung definiert

$$M = \chi_v \times H \;,$$

Gleichung 4

woraus die magnetische Induktion resultiert aus der Magnetisierung mal der magnetischen Feldstärke

$$B = \mu_0 H + J = \mu_0 (1 + \chi_v) H$$

Gleichung 5

oder

$$B=\mu_0 \mu_r H=\mu H \quad,$$

*Gleichung 6*

wobei Folgendes gilt:

- $\mu_0 = 4\pi \times 10^{-7}$ H/m (Henry pro Meter) ist die magnetische Permeabilität des Raumes,
- $\chi_v$ ist die volumetrische magnetische Suszeptibilität des Materials,
- $\mu_r = 1 + \chi_v$ ist die relative magnetische Permeabilität des Materials,
- $\mu = \mu_0 \times \mu_r$ ist die absolute magnetische Permeabilität des Materials,
- $B$ ist die magnetische Induktion in Tesla (T)
- $H$ ist das magnetische Feld in Ampere pro Meter (A/m)
- $J$ ist die Magnetisierung in Tesla (T)
- $M$ ist das magnetische Dipolmoment pro Volumeneinheit in Ampere pro Meter (A/m)

Im Folgenden wird eine zylindrische Schichtspule mit einem magnetischen Kern betrachtet, wobei die zylindrische Geometrie zu der Vereinfachung nach dem Biot & Savart Gesetz führt. Mit $O$ als Zentrum der zylindrischen Spule und ($Ox$) als Achse ist die magnetische Induktion bei einem Punkt $M(x)$ auf der ($Ox$) Achse:

$$\begin{cases} \vec{B}(x)_{Ox} = \pm \left\| \vec{B}(x)_{Ox} \right\| \vec{e}_{OX} \\ \left\| \vec{B}(x)_{Ox} \right\| = \mu \frac{NI}{4a} \left\{ \frac{(x+a)}{\sqrt{\left(R^2+(x+a)^2\right)}} - \frac{(x-a)}{\sqrt{\left(R^2+(x-a)^2\right)}} \right\} \end{cases}$$

*Gleichung 7*

- $\overline{e}_{OX}$ ist der Einheitsvektor der Achse ($Ox$)
- $\mu$ ist die absolute magnetische Permeabilität des ferromagnetischen Kerns
- $N$ ist die Anzahl der vollständigen Wickelungen
- $L = 2a$ ist die Länge der Spule in Meter (m)
- $R$ ist der innere Radius der Spule in Meter (m)
- $I$ ist die Stromflußstärke in Ampere (A) innerhalb der Spule

Auf den magnetischen Polenden ($x = -a$ und $x = +a$) ist die Induktionsfeldstärke nach Tesla wie folgt gegeben:

$$B_0 = \left\| \vec{B}(x = \pm a)_{Ox} \right\| = \frac{\mu NI}{2\sqrt{\left(R^2+(2a)^2\right)}}$$

*Gleichung 8*

Aus der Gleichung 6 leiten wir die magnetische Feldstärke an den elektromagnetischen Polenden in Ampere pro Meter ab.

$$H_0 = \left\| \vec{H}_M(x = \pm a)_{Ox} \right\| = \frac{NI}{2\sqrt{\left(R^2+(2a)^2\right)}} \quad,$$

*Gleichung 9*

wobei sich aus der Gleichung 4 und aus der Gleichung 6 das magnetische Zweipolmoment in A/m ergibt:

$$\left\{ \begin{array}{c} \vec{M}_0 = \pm \left\| \vec{M}_0 \right\| \vec{e}_{OX} \\ \left\| \vec{M}_0 \right\| = \pm \chi_V \dfrac{B_0}{\mu} \vec{e}_{OX} = \pm \dfrac{\chi_V NI}{2\sqrt{\left(R^2 + L^2\right)}} \vec{e}_{OX} \end{array} \right\}$$

*Gleichung 10*

Schließlich kann das magnetische Zweipolmoment wie folgt ausgedrückt werden:

$$\vec{m} = \overrightarrow{M_0} V = \pm \frac{\chi_V NI\pi R^2 L}{2\sqrt{(R^2+L^2)}} \vec{e}_{OX},$$

*Gleichung 11*

wobei $V=\pi R^2 L$ bekanntlich das Volumen des elektromagnetischen Kerns ist.

Nach dem bekannten Gilbert-Modell entsprechen die magnetische Dipole den zwei magnetischen Ladungen $+q_m$ und $-q_m$, welche Dipole durch eine Distanz $L$ getrennt sind. Die positive magnetische Ladung ist mit der Nord-Polung, die negative magnetische Ladung mit der Süd-Polung verknüpft.

Das magnetische Dipolmoment ist vom Süd-Pol zum Nord-Pol orientiert.

$$\vec{m} = \pm q_m L \vec{e}_{OX}$$

*Gleichung 12*

mit

- $q_m$ als die Größe der magnetischen Pole des Elektromagnetes in Amperemeter (A.m),
- $L$ als die Distanz zwischen den magnetischen Polen in Meter (m).

Durch Kombination der Gleichung 11 und der Gleichung 12 erhält man

$$q_m = \frac{\| \overrightarrow{M_0} \| V}{L} = \frac{\chi_V NI\pi R^2}{2\sqrt{(R^2 + L^2)}}$$

*Gleichung 13*

mit

- $q_m$ als die Größe der magnetischen Pole des Elektronmagnetes in Amperemeter (A.m),
- $\chi_v$ als die volumetrische Suszeptibilität des Materials,
- $N$ als die Anzahl der vollständigen Wickelungen,
- $L$ = 2a als die Länge der Spule in Meter (m),
- $R$ als der innere Radius der Spule in Meter (m),
- $I$ als die Stromstärke innerhalb der Spule in Ampere (A).

Im Weiteren wird eine Ausführungsform des erfindungsgemäßen Magnetantriebes umfassend drei auf einer Achse ausgerichtete Elektromagnete betrachtet, wobei der erste und der zweite Elektromagnet unbeweglich gelagert sind und im Folgenden als Statoren bezeichnet werden. Die Statoren sind an einer Achse angeordnet und durch eine Distanz d voneinander beabstandet. Die Statoren sind in Hinblick auf diese Offenbarung durch die folgenden Parameter hinreichend charakterisiert.

- $N_s$ als die Anzahl der Wickelungen auf der Spule des Stators,

- $L_s$ als die Länge des Stators in Meter (m),
- $R_s$ als der Radius der Spule des Stators in Meter (m),
- $I_s$ als die Stromstärke innerhalb der Spule des Stators in Ampere (A),
- $\chi_{vS}$ als die volumetrische magnetische Suszeptibilität des ferromagnetischen Kerns des Stators und
- $d = \|\vec{OO_2}\|$ als Distanz zwischen den beiden Statoren.

Der dritte Magnet ist beweglich auf einer durch die zwei Statoren definierten Achse und zwischen den zwei Statoren angeordnet. Der dritte Magnet wird im folgenden Translator genannt und ist durch die folgenden Parameter hinreichend bestimmt.

- $N_t$ als die Anzahl der Wickelungen auf der Spule des Translators,

- $L_t$ als die Länge des Translators in Meter (m),

- $R_t$ als der Radius der Spule des Translators in Meter (m),

- $I_t$ als die Stromstärke innerhalb der Translatorspule in Ampere (A),

- $\chi_{vT}$ als die volumetrische magnetische Suszeptibilität des ferromagnetischen Kerns des Translators und

- $\delta = d - L_s - L_t$ als die Wegstrecke, welcher der Translator bei Bewegung zwischen den Statoren zurücklegt.

Die Statoren sind mit einer Gleichstromquelle $+I_s$ und $-I_s$ elektrisch verbunden, wodurch sich ergibt, dass die betragsmäßige Stärke der magnetischen Pole in Absolutwerten gleich ist, jedoch die erwirkten Induktionsfelder in entgegengesetzte Richtungen gerichtet sind.

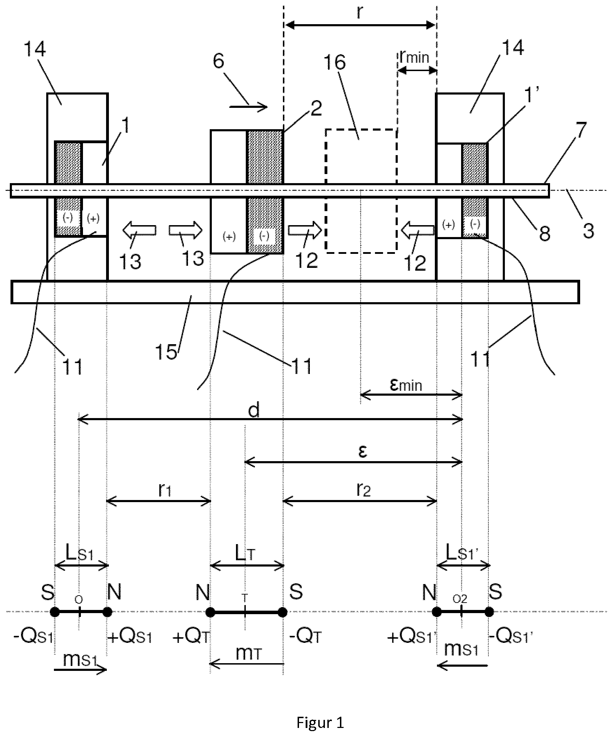

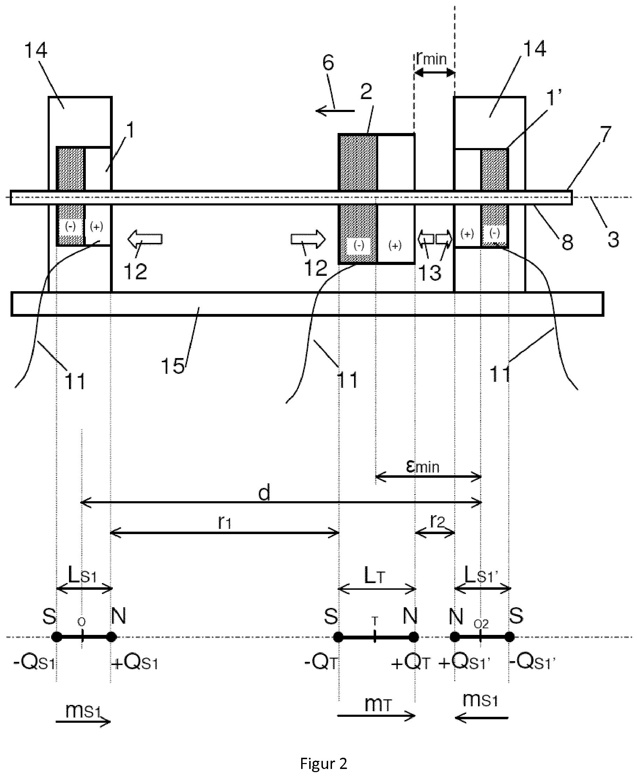

Die Polung der Statoren und des Translators ist wie aus den Figuren 1 und 2 dem Fachmann ersichtlich zu wählen, um eine Bewegung des Translators zufolge einer Abstoßungskraft und einer Anziehungskraft, welche im Folgenden durch den daraus resultierenden Kraftzustand beschrieben sind, zu erwirken.

Im Folgenden wird der resultierende Kräftezustand berechnet, welcher sich bei einer Polung der Statoren und des Translators gemäß der Darstellung in Figur 1 einstellt. Die in Figur 1 gezeigte Polung des Translators wird auch als eine "negative" Polarisierung des Translators bezeichnet, d.h. dass das magnetische Dipolmoment $\vec{m_t}$ ist in Richtung $-\vec{e}_{OX}$ orientiert.

Unter Verwendung der Gleichung 11 gilt

$$\left\{ \begin{array}{l} \vec{m}_{s1} = +\dfrac{\chi_{Vs} N_s I_s \pi R_s^2 L_s}{2\sqrt{\left(R_s^2 + L_s^2\right)}} \vec{e}_{OX} \\[2em] \vec{m}_{s2} = -\dfrac{\chi_{Vs} N_s I_s \pi R_s^2 L_s}{2\sqrt{\left(R_s^2 + L_s^2\right)}} \vec{e}_{OX} \\[2em] \vec{m}_t = -\dfrac{\chi_{Vt} N_t I_t \pi R_t^2 L_t}{2\sqrt{\left(R_t^2 + L_t^2\right)}} \vec{e}_{OX} \end{array} \right\}$$

*Gleichung 14*

und

$$\begin{cases} q_{s1} = \dfrac{\chi_{Vs} N_s I_s \pi R_s^2}{2\sqrt{\left(R_s^2 + L_s^2\right)}} \\[2ex] q_{s2} = \dfrac{\chi_{Vs} N_s I_s \pi R_s^2}{2\sqrt{\left(R_s^2 + L_s^2\right)}} \\[2ex] q_t = \dfrac{\chi_{Vt} N_t I_t \pi R_t^2}{2\sqrt{\left(R_t^2 + L_t^2\right)}} \end{cases}$$

*Gleichung 15*

Unter Verweis auf das Gilbert-Modell wird angenommen, dass die zwischen den Magneten auftretenden Magnetkräfte wegen der stattfindenden Interaktion der magnetischen Ladungen in der Nähe der Pole der magnetischen Dipole entstehen. Die Interaktionskräfte zwischen den magnetischen Polen sind durch die Gleichung 16 gegeben.

$$\vec{F} = \mu_0 \frac{q_a q_b}{4\pi r^2} \vec{e}_{OX}$$

*Gleichung 16*

wobei

- $q_i$ die Stärke des magnetischen Pols,
- $r$ der Abstand der magnetischen Pole ist.

Die stattfindende Interaktion zwischen Statoren und Translator bewirken einen resultierenden Kraftzustand, welcher auf den Translator wirkt. Dieser resultierende Kraftzustand ist gleichgerichtet mit der ($Ox$) Achse und ist in die Richtung $\vec{e}_{OX}$ gerichtet (in Figur 1 von links nach rechts).

Unter Berücksichtigung von $\delta = r_1 + r_2 = d - L_s - L_t$ für die Translator-Bewegungsdistanz zwischen den Statoren erhält man

$$\begin{cases} r_1 = X_t - \dfrac{L_s + L_t}{2} \\[2ex] r_2 = \delta + \dfrac{L_s + L_t}{2} - X_t \end{cases}$$

mit $X_t \in \left] \dfrac{L_s + L_t}{2} ; \dfrac{L_s + L_t}{2} + \delta \right[$ als die Position des Translatormittelpunktes auf der Achse ($Ox$). Unter Verwendung des bekannten Gilbert-Modells kann der resultierende Kraftzustand durch die folgende Summierung der acht Interaktionen zwischen den magnetischen Polen berechnet werden.

Bei $-q_{sl} \Leftrightarrow +q_t$ gilt für die Anziehungsinteraktion zwischen dem linken Stator und dem Translator bei einer Distanz $L_s + r_1$ :

$$\left\{ \begin{array}{l} \vec{F}_{s1ata}(r_1) = -\dfrac{\mu_0}{4\pi}\dfrac{q_{s1}q_t}{(L_s + r_1)^2}\vec{e}_{OX} \\[3ex] \vec{F}_{s1ata}(X_t) = -\dfrac{\mu_0}{4\pi}\dfrac{q_{s1}q_t}{\left(X_t + \dfrac{L_s - L_t}{2}\right)^2}\vec{e}_{OX} \end{array} \right\}$$

$- q_{s1} \Leftrightarrow -q_t$ Abstoßungsinteraktion bei einer Distanz $L_s + r_1 + L_t$

$$\left\{ \begin{array}{l} \vec{F}_{s1atb}(r_1) = +\dfrac{\mu_0}{4\pi}\dfrac{q_{s1}q_t}{(r_1 + L_s + L_t)^2}\vec{e}_{OX} \\[3ex] \vec{F}_{s1atb}(X_t) = +\dfrac{\mu_0}{4\pi}\dfrac{q_{s1}q_t}{\left(X_t + \dfrac{L_s + L_t}{2}\right)^2}\vec{e}_{OX} \end{array} \right\}$$

$+q_{s1} \Leftrightarrow +q_t$ Abstoßungsinteraktion bei einer Distanz $r_1$ :

$$\left\{ \begin{array}{l} \vec{F}_{s1bta}(r_1) = +\dfrac{\mu_0}{4\pi}\dfrac{q_{s1}q_t}{r_1^2}\vec{e}_{OX} \\[3ex] \vec{F}_{s1bta}(X_t) = +\dfrac{\mu_0}{4\pi}\dfrac{q_{s1}q_t}{\left(X_t - \dfrac{L_s + L_t}{2}\right)^2}\vec{e}_{OX} \end{array} \right\}$$

$+q_{s1} \Leftrightarrow -q_t$ Anziehungskräfte bei einer Distanz $r_1+L_t$:

$$\left\{ \begin{array}{l} \vec{F}_{s1btb}(r_1) = -\dfrac{\mu_0}{4\pi}\dfrac{q_{s1}q_t}{(r_1 + L_t)^2}\vec{e}_{OX} \\[3ex] \vec{F}_{s1btb}(X_t) = -\dfrac{\mu_0}{4\pi}\dfrac{q_{s1}q_t}{\left(X_t + \dfrac{L_t - L_s}{2}\right)^2}\vec{e}_{OX} \end{array} \right\}$$

Bei $+q_{s2} \Leftrightarrow +q_t$ gilt für die Abstoßungsinteraktion zwischen dem rechten Stator und dem Translator bei einer Distanz $L_t + r_2$:

$$\left\{ \begin{array}{l} \vec{F}_{s2ata}(r_2) = -\dfrac{\mu_0}{4\pi}\dfrac{q_{s2}q_t}{(r_2 + L_t)^2}\vec{e}_{OX} \\[3ex] \vec{F}_{s2ata}(X_t) = -\dfrac{\mu_0}{4\pi}\dfrac{q_{s2}q_t}{\left(\delta + \dfrac{L_s}{2} + \dfrac{3L_t}{2} - X_t\right)^2}\vec{e}_{OX} \end{array} \right\}$$

$+q_{s2} \Leftrightarrow -q_t$ Anziehungskräfte bei einer Distanz $r_2$:

$$\left\{ \begin{array}{l} \vec{F}_{s2atb}(r_2) = +\dfrac{\mu_0}{4\pi}\dfrac{q_{s2}q_t}{r_2^2}\vec{e}_{OX} \\[2em] \vec{F}_{s2atb}(X_t) = +\dfrac{\mu_0}{4\pi}\dfrac{q_{s2}q_t}{\left(\delta + \dfrac{L_s+L_t}{2} - X_t\right)^2}\vec{e}_{OX} \end{array} \right\}$$

$-q_{s2} \Leftrightarrow +q_t$ Anziehungskräfte bei einer Distanz $L_s+r_2+L_t$:

$$\left\{ \begin{array}{l} \vec{F}_{s2bta}(r_2) = +\dfrac{\mu_0}{4\pi}\dfrac{q_{s2}q_t}{(r_2+L_s+L_t)^2}\vec{e}_{OX} \\[2em] \vec{F}_{s2bta}(X_t) = +\dfrac{\mu_0}{4\pi}\dfrac{q_{s2}q_t}{\left(\delta + 3\dfrac{L_s+L_t}{2} - X_t\right)^2}\vec{e}_{OX} \end{array} \right\}$$

$-q_{s2} \Leftrightarrow +q_t$ Abstoßungskräfte bei einer Distanz $r_2+L_s$:

$$\left\{ \begin{array}{l} \vec{F}_{s2btb}(r_2) = -\dfrac{\mu_0}{4\pi}\dfrac{q_{s2}q_t}{(r_2+L_s)^2}\vec{e}_{OX} \\[2em] \vec{F}_{s2btb}(X_t) = -\dfrac{\mu_0}{4\pi}\dfrac{q_{s2}q_t}{\left(\delta + \dfrac{3L_s}{2} + \dfrac{L_t}{2} - X_t\right)^2}\vec{e}_{OX} \end{array} \right\}$$

Der resultierende Kraftzustand auf den Translator ist die vektorielle Summe alle Interaktionen:

$$\vec{F}_{TOT}(X_t) = \sum_{\substack{i=a,b \\ j=a,b}} \vec{F}_{s1itj}(X_t) + \sum_{\substack{i=a,b \\ j=a,b}} \vec{F}_{s2itj}(X_t)$$

$$\vec{F}_{TOT}(X_t) = \frac{\mu_0 q_t}{4\pi} \left\{ \begin{array}{c} \dfrac{qs_1}{\left(X_t + \dfrac{L_s + L_t}{2}\right)^2} \\[2em] + \dfrac{q_{s1}}{\left(X_t - \dfrac{L_s + L_t}{2}\right)^2} \\[2em] + \dfrac{q_{s2}}{\left(\delta + \dfrac{L_s + L_t}{2} - X_t\right)^2} \\[2em] + \dfrac{q_{s2}}{\left(\delta + 3\dfrac{L_s + L_t}{2} - X_t\right)^2} \end{array} \right. - \left. \begin{array}{c} + \dfrac{q_{s1}}{\left(X_t + \dfrac{L_s - L_t}{2}\right)^2} \\[2em] + \dfrac{q_{s1}}{\left(X_t + \dfrac{L_t - L_s}{2}\right)^2} \\[2em] + \dfrac{q_{s2}}{\left(\delta + \dfrac{L_s}{2} + \dfrac{3L_t}{2} - X_t\right)^2} \\[2em] + \dfrac{q_{s2}}{\left(\delta + \dfrac{3L_s}{2} + \dfrac{L_t}{2} - X_t\right)^2} \end{array} \right\} \vec{e}_{OX}$$

*Gleichung 17*

mit:

- $X_t \in \left] \dfrac{L_s + L_t}{2} ; \delta + \dfrac{L_s + L_t}{2} \right[$ Translatorposition

- $\delta = d - L_s - L_t$ Translatorwegstrecke

- 

$$\left\{ \begin{array}{l} q_{s1} = \dfrac{\chi_{Vs} N_s I_s \pi R_s^2}{2\sqrt{\left(R_s^2 + L_s^2\right)}} \\[1.5em] q_{s2} = \dfrac{\chi_{Vs} N_s I_s \pi R_s^2}{2\sqrt{\left(R_s^2 + L_s^2\right)}} \\[1.5em] q_t = \dfrac{\chi_{Vt} N_t I_t \pi R_t^2}{2\sqrt{\left(R_t^2 + L_t^2\right)}} \end{array} \right.$$

Weiters wird der resultierende Kräftezustand berechnet, welcher sich bei einer Polung der Statoren und des Translators gemäß der Darstellung in Figur 2 einstellt. Die in Figur 2 gezeigte Polung des Translators wird auch als eine "positive" Polarisierung des Translators bezeichnet, d.h. das magnetische Dipolmoment $\vec{m}_t$ ist in Richtung $\vec{e}_{OX}$ orientiert.

Aus der Gleichung 14 und Gleichung 15 erhält man die Gleichung 19:

$$\left\{ \begin{array}{l} \vec{m}_{s1} = +\dfrac{\chi_{Vs} N_s I_s \pi R_s^2 L_s}{2\sqrt{\left(R_s^2 + L_s^2\right)}} \vec{e}_{OX} \\[1.5em] \vec{m}_{s2} = +\dfrac{\chi_{Vs} N_s I_s \pi R_s^2 L_s}{2\sqrt{\left(R_s^2 + L_s^2\right)}} \vec{e}_{OX} \\[1.5em] \vec{m}_t = -\dfrac{\chi_{Vt} N_t I_t \pi R_t^2 L_t}{2\sqrt{\left(R_t^2 + L_t^2\right)}} \vec{e}_{OX} \end{array} \right.$$

*Gleichung 18*

$$\left\{ \begin{array}{l} q_{s1} = \dfrac{\chi_{Vs} N_s I_s \pi R_s^2}{2\sqrt{\left(R_s^2 + L_s^2\right)}} \\[2em] q_{s2} = \dfrac{\chi_{Vs} N_s I_s \pi R_s^2}{2\sqrt{\left(R_s^2 + L_s^2\right)}} \\[2em] q_t = \dfrac{\chi_{Vt} N_t I_t \pi R_t^2}{2\sqrt{\left(R_t^2 + L_t^2\right)}} \end{array} \right\}.$$

*Gleichung 19*

Mit $\vec{F}_{xxx}(X_t)'$ als die aus der Interaktion zwischen Statoren und Translatoren hervorgehende Kraft mit einer Polarisation des Translators gemäß Figur 1 und $\vec{F}_{xxx}(X_t)$ als die analoge Kraft bei einer Polarisation des Translators gemäß Figur 2 ergeben sich die folgenden Beziehungen über die Interaktion zwischen den Polen:

$$\left\{ \begin{array}{l} \vec{F}_{s1ata}(X_t)' = -\vec{F}_{s1ata}(X_t) \\ \vec{F}_{s1atb}(X_t)' = -\vec{F}_{s1atb}(X_t) \\ \vec{F}_{s1bta}(X_t)' = -\vec{F}_{s1bta}(X_t) \\ \vec{F}_{s1btb}(X_t)' = -\vec{F}_{s1btb}(X_t) \end{array} \right\} \text{ und } \left\{ \begin{array}{l} \vec{F}_{s2ata}(X_t)' = -\vec{F}_{s2ata}(X_t) \\ \vec{F}_{s2atb}(X_t)' = -\vec{F}_{s2atb}(X_t) \\ \vec{F}_{s2bta}(X_t)' = -\vec{F}_{s2bta}(X_t) \\ \vec{F}_{s2btb}(X_t)' = -\vec{F}_{s2btb}(X_t) \end{array} \right\},$$

woraus folgt

$$\vec{F}_{TOT}(X_t)' = \sum_{\substack{i=a,b \\ j=a,b}} \vec{F}_{s1itj}(X_t)' + \sum_{\substack{i=a,b \\ j=a,b}} \vec{F}_{s2itj}(X_t)' = -\left\{ \sum_{\substack{i=a,b \\ j=a,b}} \vec{F}_{s1itj}(X_t) + \sum_{\substack{i=a,b \\ j=a,b}} \vec{F}_{s2itj}(X_t) \right\} = -\left\{ \vec{F}_{TOT}(X_t) \right\}$$

Für die in Figur 1 dargestellten Bedingungen gilt unter Beachtung von

- $N_x$ Anzahl der Wickelungen der Spule des Translators beziehungsweise des Stators,
- $L_x$ Länge des Stators beziehungsweise des Translators in Metern (m),
- $R_x$ Radius des Stators beziehungsweise des Translators in Metern (m),
- $I_x$ Stromstärke in Ampere (A) innerhalb der Spule des Translators beziehungsweise des Stators,
- $\chi_{vX}$ ist die magnetische Suszeptibilität des ferromagnetischen Kerns des Stators beziehungsweise des Translators,
- Stator #1 ist so gepolt, dass $\vec{m}_{s1} = -\|\vec{m}_{s1}\|\vec{e}_{OX}$ gilt,
- Stator #2 ist so gepolt, dass $\vec{m}_{s2} = +\|\vec{m}_{s2}\|\vec{e}_{OX}$ gilt.

$$\vec{F}_{TOT}(X_t) = \frac{\mu_0 q_t}{4\pi} \left\{ \left[ \frac{qs_1}{\left(X_t + \frac{L_s + L_t}{2}\right)^2} + \frac{q_{s1}}{\left(X_t - \frac{L_s + L_t}{2}\right)^2} + \frac{q_{s2}}{\left(\delta + \frac{L_s + L_t}{2} - X_t\right)^2} + \frac{q_{s2}}{\left(\delta + 3\frac{L_s + L_t}{2} - X_t\right)^2} \right] - \left[ \frac{q_{s1}}{\left(X_t + \frac{L_s - L_t}{2}\right)^2} + \frac{q_{s1}}{\left(X_t + \frac{L_t - L_s}{2}\right)^2} + \frac{q_{s2}}{\left(\delta + \frac{L_s}{2} + \frac{3L_t}{2} - X_t\right)^2} + \frac{q_{s2}}{\left(\delta + \frac{3L_s}{2} + \frac{L_t}{2} - X_t\right)^2} \right] \right\} \vec{p}_{translator}$$

*Gleichung 20*

Gleichung 20

mit

- $\vec{p}_{translator} = \pm\vec{e}_{OX}$ als die Richtung des magnetischen Dipolmomentes des Translators ($\vec{m}_t = \|\vec{m}_t\|\vec{p}_{translator}$). Diese Richtung ist durch die Richtung der Wechselstromspannung $I_t$ innerhalb des Translators gegeben.

$$\left\{ \begin{array}{l} q_{s1} = \dfrac{\chi_{Vs} N_s I_s \pi R_s^2}{2\sqrt{(R_s^2 + L_s^2)}} \\[2em] q_{s2} = \dfrac{\chi_{Vs} N_s I_s \pi R_s^2}{2\sqrt{(R_s^2 + L_s^2)}} \\[2em] q_t = \dfrac{\chi_{Vt} N_t I_t \pi R_t^2}{2\sqrt{(R_t^2 + L_t^2)}} \end{array} \right\}$$

- als die magnetischen Polstärken,

$$X_t \in \left] \frac{L_s + L_t}{2} ; \delta + \frac{L_s + L_t}{2} \right[$$

- als die Translatorposition,
- $\delta = d - L_s - L_t$ als die Wegstrecke des Translators,
- $d = \|\vec{OO_2}\|$ als die vorgegebene Distanz zwischen den Statoren.

Bei gleichen Längen der Elektromagnete $L_s = L_t = L$ kann die Gleichung 20 wie folgt vereinfacht werden:

$$\vec{F}_{TOT}\left(X_t\right) = \frac{\mu_0 q_t}{4\pi}\left\{\left\{\begin{array}{c} \dfrac{qs_1}{\left(X_t + L\right)^2} \\[2mm] + \dfrac{q_{s1}}{\left(X_t - L\right)^2} \\[2mm] + \dfrac{q_{s2}}{\left(\delta + L - X_t\right)^2} \\[2mm] + \dfrac{q_{s2}}{\left(\delta + 3L - X_t\right)^2} \end{array}\right\} - \left\{\begin{array}{c} + \dfrac{2q_{s1}}{X_t^2} \\[2mm] + \dfrac{2q_{s2}}{\left(\delta + 2L - X_t\right)^2} \end{array}\right\}\right\}\vec{p}_{translator} \, .$$

*Gleichung 21*

Die weitere Diskussion basiert auf der getroffenen Vereinfachung, dass die Polstärken der Magnete konstant sind, wenngleich in Realität bei einer Bewegung des Translators zwischen den Statoren das magnetische Induktionsfeld (*Ox*) sich entwickelt.

Es gilt die Gleichung 22

$$\vec{B}_{TOT}\left(X_t, x\right)_{Ox} = \vec{B}_{s1}\left(x\right)_{Ox} + \vec{B}_{s2}\left(x\right)_{Ox} + \vec{B}_t\left(X_t, x\right)_{Ox} \ \text{ mit}$$

*Gleichung 22*

- $\vec{B}_{TOT}(X_t, x)_{Ox}$ als das totale Induktionsfeld an der Achse (*Ox*) bei einer Position x, wenn der Translator eine Position $X_t$ erreicht hat,
- $\vec{B}_{s1}(x)_{Ox}$ als das Induktionsfeld des ersten Stators auf der (*Ox*) Achse bei einer Position $x$,
- $\vec{B}_{s2}(x)_{Ox}$ als das Induktionsfeld des zweiten Stators auf der (*Ox*) Achse bei einer Position $x$,
- $\vec{B}_t(X_t, x)_{Ox}$ als das Induktionsfeld des Translators auf der (*Ox*) Achse bei einer Position $x$ und einer Position $X_t$ des Translators.

Die Größe des magnetischen Induktionsfeldes wurde bereits durch die Gleichung 7 definiert, woraus die Größe des magnetischen Induktionsfeldes zwischen erstem Stator und dem Translator ableitbar ist.

$$\left\|\vec{B}_{s1}\left(x\right)_{Ox}\right\| = \mu_{s1}\frac{N_{s1}I_{s1}}{4a_{s1}}\left\{\frac{\left(x + a_{s1}\right)}{\sqrt{\left(R_{s1}^2 + \left(x + a_{s1}\right)^2\right)}} - \frac{\left(x - a_{s1}\right)}{\sqrt{\left(R_{s1}^2 + \left(x - a_{s1}\right)^2\right)}}\right\}$$

$$\left\|\vec{B}_{s2}\left(x'\right)_{O2x}\right\| = \mu_{s2}\frac{N_{s2}I_{s2}}{4a_{s2}}\left\{\frac{\left(x' + a_{s2}\right)}{\sqrt{\left(R_{s2}^2 + \left(x' + a_{s2}\right)^2\right)}} - \frac{\left(x' - a_{s2}\right)}{\sqrt{\left(R_{s2}^2 + \left(x' - a_{s2}\right)^2\right)}}\right\}$$

$$\left\|\vec{B}_t\left(x''\right)_{Tx}\right\| = \mu_t\frac{N_t I_t}{4a_t}\left\{\frac{\left(x'' + a_t\right)}{\sqrt{\left(R_t^2 + \left(x'' + a_t\right)^2\right)}} - \frac{\left(x'' - a_t\right)}{\sqrt{\left(R_t^2 + \left(x'' - a_t\right)^2\right)}}\right\}$$

*Gleichung 23*

- $x$ als die Position auf der Achse (*Ox*) bezüglich welcher $\|\vec{B}_{s1}(x)_{Ox}\|$ berechnet wird,
- $x'$ als die Position auf der Achse (*O$_2$x*) bezüglich welcher $\|\vec{B}_{s2}(x')_{O2x}\|$ berechnet wird
- $x''$ als die Position auf der Achse (*Tx*) bezüglich welcher $\|\vec{B}_t(x'')_{Tx}\|$ berechnet wird.

$$\text{Mit} \begin{cases} \vec{0}_2 M = \vec{0}_2 0 + \vec{0}M \\ \vec{T}M = \vec{T}0 + \vec{0}M \end{cases} \text{kann}$$

$$\left\| \vec{B}_{s2}(x)_{Ox} \right\| \text{ und } \left\| \vec{B}_{s2}(x)_{Ox} \right\|$$

unter Verwendung von $\begin{cases} x' = x - d \\ x'' = x - X_t \end{cases}$ als Variablenänderungen ausgedrückt werden:

$$\left\| \vec{B}_{s1}(x)_{Ox} \right\| = \mu_{s1} \frac{N_{s1} I_{s1}}{4a_{s1}} \left\{ \frac{(x + a_{s1})}{\sqrt{\left(R_{s1}^2 + (x + a_{s1})^2\right)}} - \frac{(x - a_{s1})}{\sqrt{\left(R_{s1}^2 + (x - a_{s1})^2\right)}} \right\}$$

$$\left\| \vec{B}_{s2}(x)_{Ox} \right\| = \mu_{s2} \frac{N_{s2} I_{s2}}{4a_{s2}} \left\{ \frac{(x - d + a_{s2})}{\sqrt{\left(R_{s2}^2 + (x - d + a_{s2})^2\right)}} - \frac{(x - d - a_{s2})}{\sqrt{\left(R_{s2}^2 + (x - d - a_{s2})^2\right)}} \right\}.$$

$$\left\| \vec{B}_t(X_t, x)_{Ox} \right\| = \mu_t \frac{N_t I_t}{4a_t} \left\{ \frac{(x - X_t + a_t)}{\sqrt{\left(R_t^2 + (x - X_t + a_t)^2\right)}} - \frac{(x - X_t - a_t)}{\sqrt{\left(R_t^2 + (x - X_t - a_t)^2\right)}} \right\}$$

*Gleichung 24*

Auf der (*Ox*) Achse ist das Induktionsfeld in der gleichen Richtung wie das magnetische Dipolmoment orientiert. Unter Berücksichtigung von:

$$\vec{B}_{TOT}(X_t, x)_{Ox} = \left\{ \left\| \vec{B}_{s1}(x)_{Ox} \right\| - \left\| \vec{B}_{s2}(x)_{Ox} \right\| \right\} \vec{e}_{OX} + \left\| \vec{B}_t(X_t, x)_{Ox} \right\| \vec{p}_t$$

*Gleichung 25*

mit

- $\vec{e}_{OX}$ als Einheitsvektor für die Richtung der Achse
- $\vec{p}_{translator} = \pm \vec{e}_{OX}$ als die Richtung des magnetischen Dipolmomentes des Translators, erhält man

$$\left( \vec{m}_t = \left\| \vec{m}_t \right\| \vec{p}_{translator} \right).$$

Die Richtung ist durch die Richtung der Wechselspannung $I_t$ innerhalb des Translators gegeben. Durch Zusammenschau der Gleichung 4, Gleichung 6 und Gleichung 11 erhält man:

$$q_m = \frac{\left\| \vec{M} \right\| V}{L} = \left\| \vec{M} \right\| \pi R^2 = \frac{\chi_v}{\mu} \pi R^2 \left\| \vec{B} \right\| = \frac{\mu_r - 1}{\mu_0 \mu_r} \pi R^2 \left\| \vec{B} \right\|.$$

*Gleichung 26*

Da gilt

$$\text{Stator \#1}: \begin{cases} q_{s1a}(X_t) = \dfrac{\mu_{Rs}-1}{\mu_0\mu_{Rs}}\pi R_s^2 \left\|\vec{B}_{TOT}(X_t, x=-a_s)\right\| \\[2em] q_{s1b}(X_t) = \dfrac{\mu_{Rs}-1}{\mu_0\mu_{Rs}}\pi R_s^2 \left\|\vec{B}_{TOT}(X_t, x=+a_s)\right\| \end{cases}$$

- Stator #1 : *Gleichung 27*                                                   Gleichung 27

$$\text{Stator \#2}: \begin{cases} q_{s2a}(X_t) = \dfrac{\mu_{Rs}-1}{\mu_0\mu_{Rs}}\pi R_s^2 \left\|\vec{B}_{TOT}(X_t, x=d-a_s)\right\| \\[2em] q_{s2b}(X_t) = \dfrac{\mu_{Rs}-1}{\mu_0\mu_{Rs}}\pi R_s^2 \left\|\vec{B}_{TOT}(X_t, x=d+a_s)\right\| \end{cases}$$

- Stator #2 : *Gleichung 28*                                                   Gleichung 28

$$\text{Translator}: \begin{cases} q_{ta}(X_t) = \dfrac{\mu_{Rt}-1}{\mu_0\mu_{Rt}}\pi R_t^2 \left\|\vec{B}_{TOT}(X_t, x=X_t-a_t)\right\| \\[2em] q_{tb}(X_t) = \dfrac{\mu_{Rt}-1}{\mu_0\mu_{Rt}}\pi R_t^2 \left\|\vec{B}_{TOT}(X_t, x=X_t-a_t)\right\| \end{cases}$$

- Translator : *Gleichung 29*                                                   Gleichung 29

wird Gleichung 20 zu:

$$\vec{F}_{TOT}(X_t) = \frac{\mu_0}{4\pi}\left\{\left\{\begin{array}{l} \dfrac{q_{s1a}(X_t)q_{tb}(X_t)}{\left(X_t+\dfrac{L_s+L_t}{2}\right)^2} \\[2em] +\dfrac{q_{s1b}(X_t)q_{ta}(X_t)}{\left(X_t-\dfrac{L_s+L_t}{2}\right)^2} \\[2em] +\dfrac{q_{s2a}(X_t)q_{tb}(X_t)}{\left(\delta+\dfrac{L_s+L_t}{2}-X_t\right)^2} \\[2em] +\dfrac{q_{s2b}(X_t)q_{ta}(X_t)}{\left(\delta+3\dfrac{L_s+L_t}{2}-X_t\right)^2} \end{array}\right\} - \left\{\begin{array}{l} +\dfrac{q_{s1a}(X_t)q_{ta}(X_t)}{\left(X_t+\dfrac{L_s-L_t}{2}\right)^2} \\[2em] +\dfrac{q_{s1b}(X_t)q_{tb}(X_t)}{\left(X_t+\dfrac{L_t-L_s}{2}\right)^2} \\[2em] +\dfrac{q_{s2a}(X_t)q_{ta}(X_t)}{\left(\delta+\dfrac{L_s}{2}+\dfrac{3L_t}{2}-X_t\right)^2} \\[2em] +\dfrac{q_{s2b}(X_t)q_{tb}(X_t)}{\left(\delta+\dfrac{3L_s}{2}+\dfrac{L_t}{2}-X_t\right)^2} \end{array}\right\}\right\}\vec{P}_{translator}$$

*Gleichung 30*

mit:

$$X_t \in \left] \frac{L_s+L_t}{2}; \delta+\frac{L_s+L_t}{2}\right[$$

-                                                                      als die Translatorposition,

- $\delta = d - L_s - L_t$ als die Translatorbewegungsstrecke,

- $d = \|\vec{O O_2}\|$ als die Distanz zwischen den Zentren der Statoren.

Die magnetischen Polstärken werden unter Verwendung der Gleichung 27 für den ersten Stator, der Gleichung 28 für den zweiten Stator und der Gleichung 29 für den Translator berechnet. Die Berechnung der magnetischen Polstärken schließt die Berechnung des totalen magnetischen Induktionsfeldes an den Polen ein. Dies geschieht unter Verwendung der Gleichung 24 und der Gleichung 25.

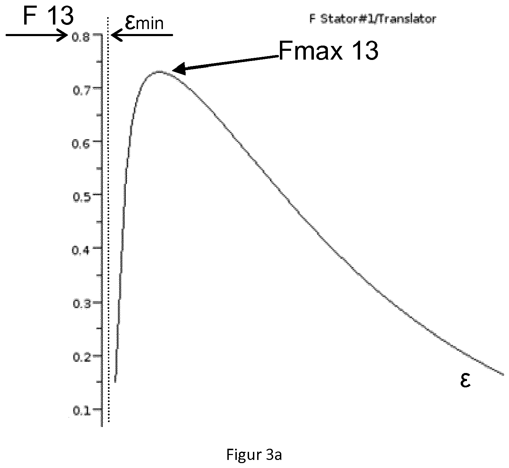

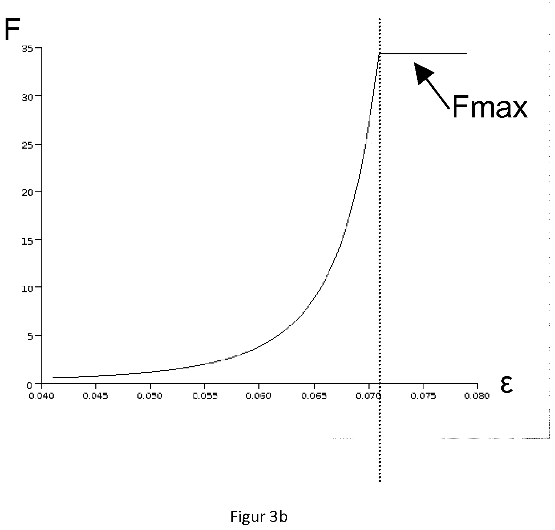

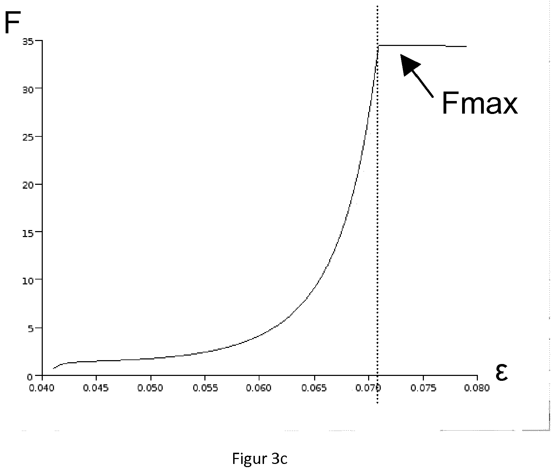

Die Gleichung 30 ist eine Funktion in Abhängigkeit der Position des Translators zwischen den Statoren. Der auf den Translator wirkende resultierende Kraftzustand setzt sich zusammen aus der zwischen dem ersten Stator und dem Translator wirkenden Abstoßungskraft und der zwischen dem zweiten Stator und dem Translator wirkende Anziehungskraft. Die Abhängigkeit der jeweiligen Kräfte sind in den unten anstehenden Figuren 3a, 3b, 3c dargestellt.

Die obige mathematische Erörterung zeigt weiters, dass bei einer Position des Translators zu einem Stator die Anziehungskraft und - nach Umpolung des Stators oder des Translators - die Abstoßungskraft unterschiedlich groß sind.

Die erfindungsgemäße Magnetvorrichtung basiert darauf, dass durch die Polung von Stator oder Translator ein resultierender Kraftzustand, welcher auf den Translator wirkt und eine Bewegung dieses erwirkt, geschaffen wird.

Eine Ausführungsform der erfindungsgemäßen Magnetvorrichtung kann sein, dass der Stator als ein Permanentmagnet, der Translator als ein Elektromagnet ausgebildet sind.

Diese Ausführungsform hat bei Verwendung der erfindungsgemäßen Magnetvorrichtung als Magnetantrieb den Nachteil, dass ein den Translator mit einer Stromversorgung verbindende Kabel in zumindest Teilbereichen wegen der mechanischen Koppelung mit dem Translator einer Bewegung unterliegt. Bei der Verwendung von n=1,2,3,.. Statoren und n-1 zwischen den Statoren angeordneten Translatoren bedingt die Ausbildung der Translatoren als Elektromagnete jedoch, dass n-1 Translatoren kleiner als n Statoren umgepolt werden.

Eine weitere Ausführungsform der erfindungsgemäßen Magnetvorrichtung kann sein, dass der Stator als ein Elektromagnet, der Translator als ein Permanentmagnet ausgebildet sind.

Diese Ausführungsform der erfindungsgemäßen Magnetvorrichtung bei Verwendung als Magnetantrieb zeichnet sich dadurch aus, dass der Stator als nicht beweglicher Magnet mit einer Stromversorgung gekoppelt ist. Dies hat den Vorteil, dass die Stromversorgung und den Stator verbindenden Kabeln keine Bewegung erfahren. Bei der Verwendung von n=1,2,3,.. Statoren und n-1 zwischen den Statoren angeordneten Translatoren bedingt die Ausbildung der Statoren als Elektromagnete jedoch, dass n Statoren größer als n-1 Translatoren umgepolt werden.

Es können Stator und Translator als Elektromagnete oder als Permanentmagnete ausgebildet sein.

Die Ausbildung des zumindest einen Stators und des Translators als Permanentmagnet betrifft den Anwendungsfall des Widerstandselementes. Es wird hierbei die Bewegung des Stators durch Aktivierung von Abstoßungskräften zwischen gleichgepolten Polen von Stator und Translator begrenzt.

Eine mögliche Ausführungsform der erfindungsgemäßen Magnetvorrichtung kann sein, dass der Stator aus mehreren Stator-Einzelmagneten und/oder der Translator aus mehreren Translator-Einzelmagneten besteht.

Vorzugsweise sind die Einzelmagnete so angeordnet, dass durch eine Superposition der einzelnen Magnetfelder eine größere Anziehungskraft beziehungsweise Abstoßungskraft, welche zwischen den Statoren und dem Translator wirkt, geschaffen wird.

Die Steuervorrichtung kann ein zwischen dem Stator und dem Translator positioniertes Distanzelement und/oder ein die Bewegung des Translators begrenzendes mechanisches Zwangssystem umfassen.

Das Distanzelement kann einen Schalter umfassen, durch welchen ein Wechsel der Polarität des Stators und/oder des Translators und/oder eine Veränderung der Polstärke des Stators oder des Translators aktiviert wird.

Die Steuervorrichtung kann eine Distanzmessvorrichtung und/oder eine Zeitmessvorrichtung umfassen, mittels welcher Steuervorrichtung in Abhängigkeit der Position des Translators relativ zu dem Stator und/oder in Abhängigkeit einer Zeitperiode die Polarisation des Stators und/oder des Translators und/oder die Feldstärke des Stators und/oder des Translators änderbar ist.

Eine Ausführungsform der erfindungsgemäßen Magnetvorrichtung umfasst zumindest eine Steuereinheit, welche die Position des Translators relativ zum Stator steuert. Diese Steuervorrichtung ist mit einer Positionsmessvorrichtung gekoppelt, welche die Position des Translators gegebenenfalls in Bezugnahme zu einem Stator durch Messmethoden, insbesondere Distanzmessmethoden und Positionsmessmethoden nach dem Stand der Technik misst, und gegebenenfalls in Bezugnahme auf die Position des Translators relativ zu dem Stator die Polung des Stators oder des Translators setzt.

Die Steuervorrichtung ist keinesfalls auf die Messung einer bestimmten Position des Translators oder das Feststellen des Erreichens einer bestimmten Position durch den Translator beschränkt. Die Steuervorrichtung kann weitere Vorrichtungen wie beispielsweise Positionsmessmittel oder Geschwindigkeitsmessmittel zur Messung der Position des Translators oder der Geschwindigkeit des Translator an einer beliebigen Position des Translators umfassen.

Die Messung von Position und Geschwindigkeit des Translators an einer beliebigen Position kann in Bezugnahme auf die Steuerung der Bewegung des Translators an einer Position mit einem definierten Abstand zum Stator insbesondere bei einer hohen Geschwindigkeit des Translators von Vorteil sein, zumal der Translator an einer bestimmten Position mit einem definierten Abstand zum Stator abgebremst und beschleunigt werden muss.

Die Bestimmung der Position des Translators ist keinesfalls auf die Messung einer Position des Translator relativ zum Stator beschränkt. Die Bestimmung der Position des Translators kann zu einem beliebigen Bezugspunkt erfolgen.

Eine weitere Ausführungsform der erfindungsgemäßen Magnetvorrichtung zeichnet sich dadurch aus, dass der Translator mit einem mechanischen Zwangssystem wie beispielsweise eine Kurbelwelle gekoppelt ist, durch welches Zwangssystem die Bewegung des Translators, im genaueren die maximalen Bewegungsamplituden des Translators unter Wahrung der Beabstandung des Translators vom Stator gesteuert werden. Das mechanische Zwangssystem kann mit einem durch die erfindungsgemäße Magnetvorrichtung anzutreibenden Element wie beispielsweise ein Rad gekoppelt oder als dieses ausgebildet sein.

Bei einer linearen Bewegung des Translators ist eine mögliche Anordnung, dass die Stator-Einzelmagnete am Stator und/oder die Translator-Einzelmagnete am Translator entlang einer ein Polygon beschreibenden Linie um eine zu der Translator-Bewegungsrichtung parallel orientierten Polygonachse angeordnet sind.

Die Translator-Bewegungsrichtung und die durch die jeweiligen Magnetfelder aktivierten Anziehungskräfte und Abstoßungskräfte sind parallel zu einander orientiert.

Bei einer rotatorischen Bewegung des Translators ist eine mögliche Anordnung der Stator-Einzelmagnete und/oder die Translator-Einzelmagnete, dass diese am Stator beziehungsweise am Translator entlang einer ein Polygon beschreibenden Linie um eine zu der Translator-Bewegungsrichtung parallel orientierten Achse angeordnet sind.

Die jeweilige Translator-Bewegungsrichtung und die durch die jeweiligen Magnetfelder aktivierten Anziehungskräfte und Abstoßungskräfte sind parallel zu einander orientiert.

Der Translator kann durch zumindest eine Führungseinheit relativ zum Stator beweglich gelagert sein, wobei die Führungsachse der Führungseinheit den Stator in einem Bereich zwischen zwei unmittelbar benachbarten Stator-Einzelmagneten und den Translator in einem Bereich zwischen zwei unmittelbar benachbarten Translator-Einzelmagneten schneidet.

Durch die erfindungsgemäße Anordnung der Führungseinheit ist das Magnetfeld des jeweiligen Einzelmagneten nicht durch die Anwesenheit der Führungseinheit gestört.

Ein sich zwischen dem Stator und dem in der Position mit dem größten Abstand d zum Stator befindlichen Translator erstreckendes Volumen kann ein Vakuum sein.

Durch die erfindungsgemäße Ausbildung des Vakuums oder eines Bereiches mit reduziertem Luftdruck wird der gegen eine Bewegung des Translators wirkende Luftwiderstand reduziert. Zur Ausbildung des Vakuums ist die erfindungsgemäße Magnetvorrichtung in einem luftdichten Gehäuse angeordnet, wobei die Antriebsachse, die Stromkabel et cetera durch dieses Gehäuse geführt sind.

| 1,1' | Stator |
|---|---|
| 2 | Translator |
| 3 | Antriebsachse |
| 4 | Stator-Einzelmagnete |
| 5 | Translator-Einzelmagnete |
| 6 | Translator-Bewegungsrichtung |
| 7 | Führungseinheit |
| 8 | Führungsachse |
| 9 | Achse |
| 10 | Polygon |
| 11 | Stromkabel |
| 12 | Anziehungskraft |
| 13 | Abstoßungskraft |
| 14 | Statorträger |
| 15 | Trägerkonstruktion |
| 16 | Position Stator |
| 17 | Scheibe |
| 18 | Scheibenmittelpunkt |
| 19,19' | Stab |
| 20,20' | Magnetantrieb |
| 21 | Berechnungsbereich |
| 22 | Kern |
| 23 | Spule |

Figur 1 und Figur 2 zeigen eine Ausführungsform der erfindungsgemäßen Magnetvorrichtung als Magnetantrieb 20 samt der in der Beschreibung verwendeten Variablen.

Figuren 3a-3c zeigen Diagramme betreffend die Größe der auf den Translator wirkenden Kräfte in Abhängigkeit der Distanz der Position des Translators zu den Statoren.

Figur 4 und Figur 5 zeigen eine weitere Ausführungsform der erfindungsgemäßen Magnetvorrichtung als Magnetantrieb.

Figur 6 zeigt eine weitere, zu der in Figur 1 und 2 gezeigten Ausführungsform ähnliche Ausführungsform der erfindungsgemäßen Magnetvorrichtung als Magnetantrieb.

Figur 7 zeigt eine weitere Ausführungsform der erfindungsgemäßen Magnetvorrichtung Magnetantrieb.

Figur 8 veranschaulicht eine mögliche Koppelung mehrerer Magnetantriebe mit einer anzutreibenden Welle.

Figur 9 bis Figur 11 zeigen eine weitere Ausführungsform der erfindungsgemäßen Magnetvorrichtung als Magnetantrieb.

Figur 12 zeigt eine weitere Ausführungsform der erfindungsgemäßen Magnetvorrichtung als Widerstandselement.

Figur 13 zeigt eine isometrische Ansicht einer Ausführungsform der erfindungsgemäßen Magnetvorrichtung.

Figur 14 zeigt eine Ansicht von oben gleich einer Ansicht von unter der in Figur 13 gezeigten Ausführungsform der erfindungsgemäßen Magnetvorrichtung.

Figur 15 zeigt ein seitliches Schnittbild der in Figur 13 bis Figur 14 gezeigten Ausführungsform der erfindungsgemäßen Magnetvorrichtung.

Figur 16 zeigt die Anordnung der Elemente im Rahmen einer FEM-Simulation der in den Figuren 13 bis 15 gezeigten Magnetvorrichtung.

Figur 17 bis Figur 18 zeigt das Ergebnis der FEM-Simulation.

Figur 19 und Figur 20 zeigt Diagramme zu der FEM-Simulation.

Figur 1 und Figur 2 zeigen eine Ausführungsform der erfindungsgemäßen Magnetvorrichtung als Magnetantrieb 20 samt der in der Beschreibung verwendeten Variablen. Der Magnetantrieb 20 umfasst einen Translator 2 und seitlich zum Translator 2 angeordnete Statoren 1, 1'. Die Statoren 1, 1' und der Translator 2 sind Elektromagnete, die entlang einer Achse - in der in Figur 1 und Figur 2 gezeigten bespielhaft gezeigten Ausführungsform entlang der Antriebsachse des Translators 3 - ausgerichtet sind. Das dipolare Moment der Statoren 1,1' und des Translators 2 ist zu dieser Achse parallel ausgerichtet.

Zur alternierenden Polung des Translators 2 ist dieser über ein Stromkabel 11 mit einer nicht dargestellten Wechselstromquelle verbunden, während die Statoren 1, 1' mit jeweils weiteren Stromkabeln 11 mit einer nicht dargestellten Gleichstromquelle verbunden sind.

Die Polung des Translators 2 ist so gesetzt, dass die dem linken Stator 1 zugewandte Polung des Translators 2 eine gleiche Polung zum näheren Pol des linken Stators 1 aufweist, wodurch eine Abstoßungskraft 13 zwischen dem linken Stator 1 und dem Translator 2 aktiviert wird; der dem rechten Stator 1' zugewandte Pol des Translators 2 weist eine unterschiedliche Polung zum näheren Pol des rechten Stators 1' auf, wodurch eine Anziehungskraft 12 zwischen dem linken Stator 1 und dem Translator 2 aktiviert wird. Die Anziehungskraft 12 und Abstoßungskraft 13 wirken auf den Translator 2 und bewirken als resultierenden Kraftzustand eine Bewegung des Translators 2 in der in Figur 1 dargestellten Translator-Bewegungsrichtung 6 von links nach rechts, wobei die Translator-Bewegungsrichtung 6 zum Stator 1 gerichtet orientiert ist. Die nach Umpolung des Translators 2 nachfolgend stattfindende Bewegung des Translators 2 in Translator-Bewegungsrichtung 6 von rechts nach links ist in Figur 2 dargestellt.

Bei Betrieb des Magnetantriebes 20 weist der Translator 2 stets einen definierten Abstand r größer als Null zum Stator 1 auf. Dieses Merkmal (siehe kennzeichnender Teil des Anspruches 1) ist ein Kontakt des Translators 2 mit einem Stator 1, 1' bei Betrieb des erfindungsgemäßen Magnetantriebes 20 ausgeschlossen. Der Abstand r ist definiert als jener Abstand zwischen den einander zugewandten Polenden des Translators 2 und des jeweiligen Stators 1, 1'.

Bei einer linearen Bewegung des Translators 2 in die Translator-Bewegungsrichtung 6 nach links erreicht der Translator 2 die Position 16. Die Position 16 ist eine Endposition der linearen Bewegung des Translators 2 und ist dadurch charakterisiert, dass der Translator 2 zum linken Stator 1 einerseits den kleinsten definierten Abstand $r_2$, andererseits zum rechten Stator 1' den größten definierten Abstand $r_1$ aufweist. Die Abstände $r_1$ und $r_2$ sind so definiert, dass nach Umpolung des Translators 2 zur Durchführung einer nachfolgenden in Figur 2 dargestellten Translatorbewegung von rechts nach links die auf den Translator 2 wirkende, sich durch die gleiche Polung der unmittelbar benachbarten Pole von Translator 2 und linkem Stator 1 ergebende Abstoßungskraft maximal ist.

Der Abstand r wird durch eine Steuereinheit vorgegeben, durch welche Steuereinheit die Polung des als Elektromagnet ausgebildeten Translators 2 gewechselt wird. Bei Erreichen der Position 16 durch den Translator 2 erfolgt eine Umpolung des Translators 2, sodass der Translator 2 in eine zu der in Figur 1 dargestellten entgegengesetzten Bewegungsrichtung bewegt wird. Durch den Wechsel der Polarität der Statoren 1, 1' werden zwischen dem Translator 2 und dem linken Stator 1 Abstoßungskräfte, zwischen dem Translator 2 und dem rechten Stator 1' Anziehungskräfte mit einem definierten Energieniveau aktiviert, wodurch eine in Figur 2 dargestellte Bewegung des Translators 2 von rechts nach links hervorgerufen wird.

Der Stator 1 wird durch einen Statorträger 14 auf einer Trägerkonstruktion 15 gehalten.

Der Translator 2 ist mit einer Antriebsachse 3 gekoppelt, welche in der in Figur 1 dargestellten Ausführungsform auch als Führungseinheit 7 des Translators dient. Die Führungsachse 8 der Führungseinheit 7 ist parallel zu der Translator-Bewegungsrichtung 6 orientiert. Die Führungseinheit 8 verläuft durch die Statoren 1, 1' und durch den Translator 2, wobei das jeweilige Magnetfeld der Statoren 1, 1' und des Translators 2 durch die Anwesenheit der Führungseinheit 8 in den jeweiligen Magnetfeldern gestört ist.

Das Volumen, welches sich zwischen den Statoren 1, 1' erstreckt, ist ein Vakuum. Der Magnetantrieb 20 ist hierzu in einem nicht dargestellten Gehäuse situiert.

Der in Figur 3a offenbarte Graph zeigt die Abhängigkeit der Abstoßungskraft 13 zwischen Translator 2 und dem linken Stator 1 bei einer Bewegung des Translators 2 gemäß Figur 1. In Figur 3a sowie in den Figuren 3b und 3c ist die Beabstandung des Translators 2 von dem jeweiligen Stator 1,1', die zwischen dem Translator 2 und dem Stator 1,1' wirkende Kraft auf der Ordinate aufgetragen. Die in den Figur 3a, 3b und 3c offenbarten Graphen liegen einer Berechnung gemäß der im Beschreibungstext offenbarten Gleichungen mit den folgenden Annahmen zu Grunde:

- $\mu_{Rs1} = \mu_{Rs2} = \mu_{Rt} = 100$

- $N_{s1} = N_{s2} = N_t = 40$

- $R_{s1} = R_{s2} = R_t = 0{,}02m$

- $L_{s1} = L_{s2} = L_t = 0{,}04m$

- $I_{s1} = I_{s2} = I_t = 1A$

- die Translatorbewegung beträgt $\delta = 0{,}04m$

Der Translator 2 würde bei einer Position $X_t = 0{,}04m$ in Kontakt mit dem linken Stator 1 stehen. Der Verlauf des $\gamma$-Wertes des in Figur 3a gezeigten Graphen nähert sich dem Wert 0 an. Der Maximalwert der Abstoßungskraft 13 tritt bei einem Abstand $\varepsilon$ auf. Vorzugsweise wird die Position 16 des Translators 2 durch die Steuereinheit so gesetzt, dass das Zentrum des Translators 2 einen Abstand $\varepsilon_{min}$ zum Zentrum des unmittelbar benachbarten Stators 1, 1' aufweist.

Der in Figur 3b gezeigte Graph betrifft die Abhängigkeit der Anziehungskraft 12 von der Beabstandung des Translators 2 zum rechten Stator 1' gemäß Darstellung in Figur 1. Es gilt allgemein, dass die Anziehungskraft 12 mit zunehmender Annäherung des Translators 2 zum rechten Stator 1' größer wird.

Figur 3c zeigt den aus den Graphen aus Figur 3a und Figur 3b resultierenden Graphen. Der in Figur 3c offenbarte Graph zeigt somit den sich aus dem Verlauf der Abstoßungskraft 13 und der Anziehungskraft 12 ergebenden resultierend Kraftzustand in Abhängigkeit der Position des Translators 2 zwischen den Statoren 1, 1', wobei der resultierende Kräftezustand in Richtung parallel zu der Achse, in Bezugnahme auf Figur 1 und Figur 2 parallel zu der Bewegungsachse 3 betrachtet wird.

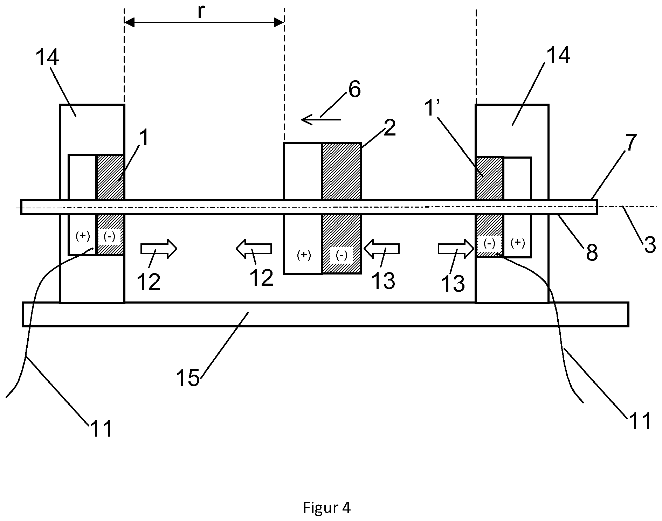

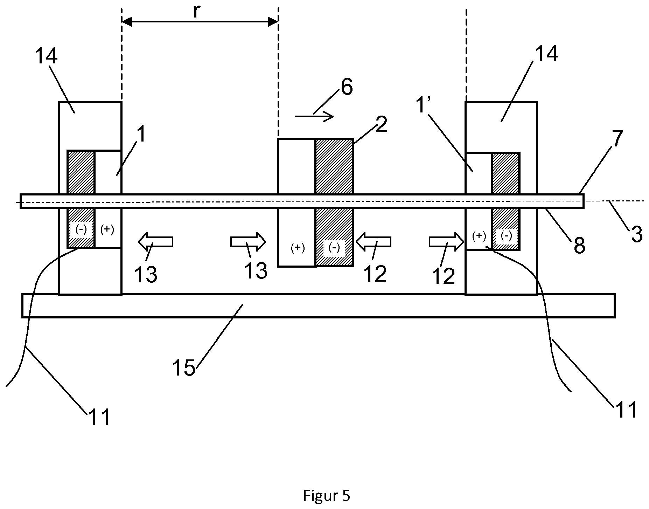

Figur 4 und Figur 5 zeigen eine weitere, zu der in Figur 1 und Figur 2 ähnliche Ausführungsform der erfindungsgemäßen Magnetvorrichtung als Magnetantriebes 20. Im Unterschied zu der in Figur 2 dargestellten Ausführungsform bleibt bei der in Figur 3 dargestellten weiteren Ausführungsform die Polung des Translators 2 bei einer Bewegung des Translators 2 gleich, während die Polung der Statoren 1, 1' gewechselt wird.

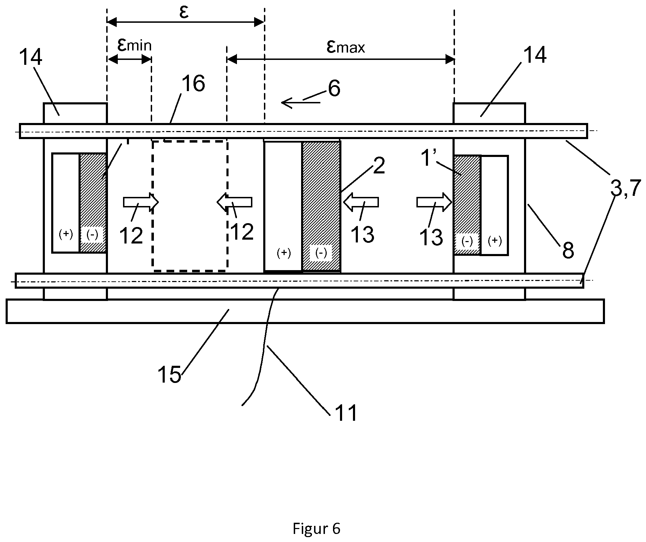

Figur 6 zeigt eine zu der in Figur 4 gezeigten Ausführungsform ähnliche Ausführungsform, welche im Unterschied zu der in Figur 4 gezeigten Ausführungsform zwei Führungseinheiten umfasst. Vorteilhaft gegenüber der in Figur 4 gezeigten Ausführungsform ist das zwischen den Statoren 1, 1' und dem Translator 2 wirkende Magnetfeld nicht durch die Anwesenheit der Führungseinheit 7 gestört.

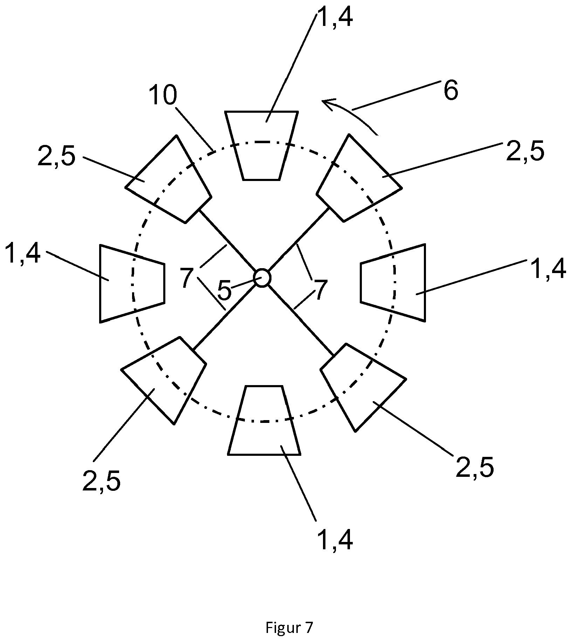

Figur 7 zeigt eine weitere Ausführungsform des erfindungsgemäßen Magnetantriebes 20, wobei der Translator 2 rotativ bewegt wird. Der Magnetantrieb 20 umfasst vier segmentartig ausgeformte Translatoren-Einzelmagnete 5, welche in Form eines Kreises 10 um eine Antriebsachse 3 und eine Translator-Drehachse und rechtwinkelig zu dieser angeordnet ist. Die Translator-Einzelmagnete 5 sind mit der Antriebsachse 3 über Führungseinheiten mechanisch gekoppelt, sodass die Translator-Einzelmagnete 5 einen Translator 2 bilden. In den Bereichen zwischen den Translatoren-Einzelmagneten 5 sind vier, ebenfalls segmentartig ausgeformte Stator-Einzelmagnete 4 angeordnet, die durch eine nicht dargestellte mechanische Koppelung zu einem Stator 1 gekoppelt sind.

Gemäß obiger Offenbarung sind die einander zugewandten Pole der Stator-Einzelmagnete 4 und der Translator-Einzelmagnete 5 unterschiedlich oder gleich gepolt.

Bei einer rotativen Bewegung des Translators 2 bei Gebrauch des Magnetantriebes 20 ist dieser stets vom Stator 1 beabstandet, wobei die rotative Translator-Bewegungsrichtung 6 eines Translator-Einzelmagneten 5 stets zu einem Stator-Einzelmagneten 4 gerichtet ist.

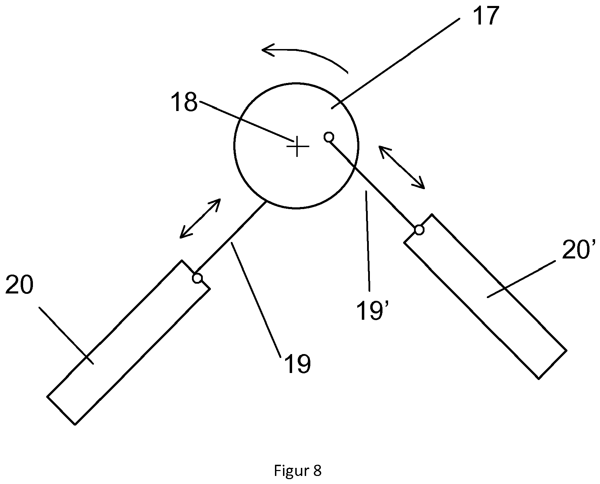

Figur 8 zeigt die Koppelung eines ersten erfindungsgemäßen Magnetantriebes 20 mit einem zweiten erfindungsgemäßen Magnetantrieb 20'. Die mechanische Koppelung der Magnetantriebe 20, 20' erfolgt über eine Scheibe 17, welche um einen Scheibenmittelpunkt 18 drehbar gelagert ist. Zwischen der Scheibe 17 und den Magnetantrieben 20,20' ist aus geometrischen Gründen jeweils ein Stab 19 vorgesehen, welcher an seinen einen Ende mit der Scheibe 17 in Bezugnahme auf den Scheibenmittelpunkt 18 exzentrisch, an seinem anderen Ende mit dem jeweiligen Magnetantrieb 20,20' gelenkig verbunden ist.

Die Magnetantriebe 20,20' sind in Bezugnahme auf den Scheibenmittelpunkt 18 ortsfest gelagert, sodass durch die durch die Magnetantriebe 20,20' erzeugte lineare Bewegung eine Rotationsbewegung der Scheibe 17 hervorgerufen wird. Durch die exzentrische Lagerung des Stabes 19,19' wird die lineare Bewegung des Translators 2 (in Figur 8 nicht dargestellt) des Magnetantriebes 20,20' mechanisch gesteuert.

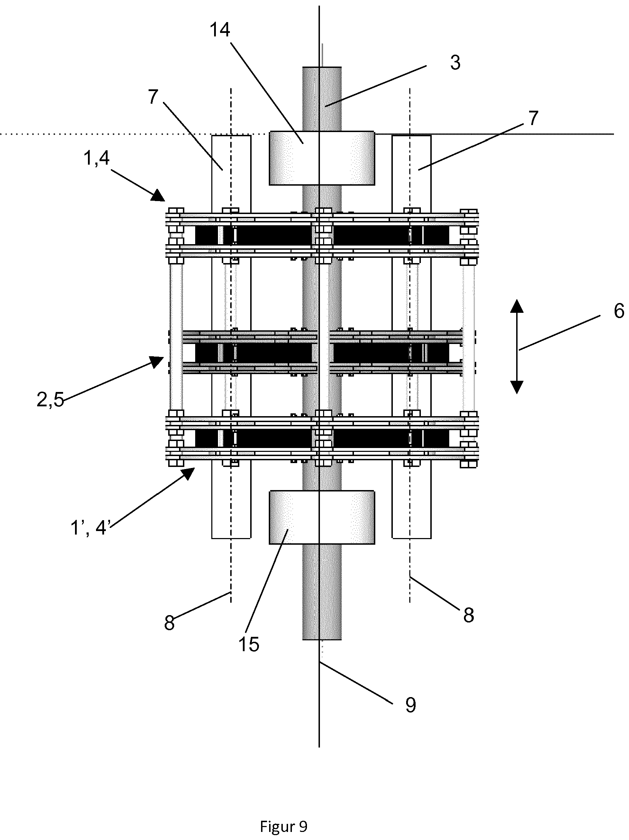

Figur 9 bis Figur 11 zeigen Ansichten einer Ausführungsform eines Magnetantriebes, welcher sich durch die Anordnung mehrerer Stator-Einzelmagnete 4 an den Statoren 1,1' und mehrerer Translator-Einzelmagnete 5 an dem Translator 2 auszeichnet, sowie Detailansichten des Translators 2 und des Stators 1,1'.

Figur 9 zeigt eine Ansicht von oben der in Figur 9 bis 11 gezeigten Ausführungsform des erfindungsgemäßen Magnetantriebes. Der Magnetantrieb umfasst 2 Statoren 1,1', welche entlang einer Achse 9 angeordnet sind. Es sind weiters zwei Führungseinheiten 7 angeordnet, durch welche der zwischen den Statoren 1,1' situierte Translator 2 relativ zu den Statoren 1,1' bewegbar gelagert ist. Der Translator 2 ist weiters mit einer Antriebsachse 3 gekoppelt, welche sich durch die Statoren 1,1' zu einem anzutreibenden Element (nicht dargestellt) erstreckt. Die Trägerkonstruktion 15 dient als Lagerung für die Achse 9 und die Antriebsachse 3.

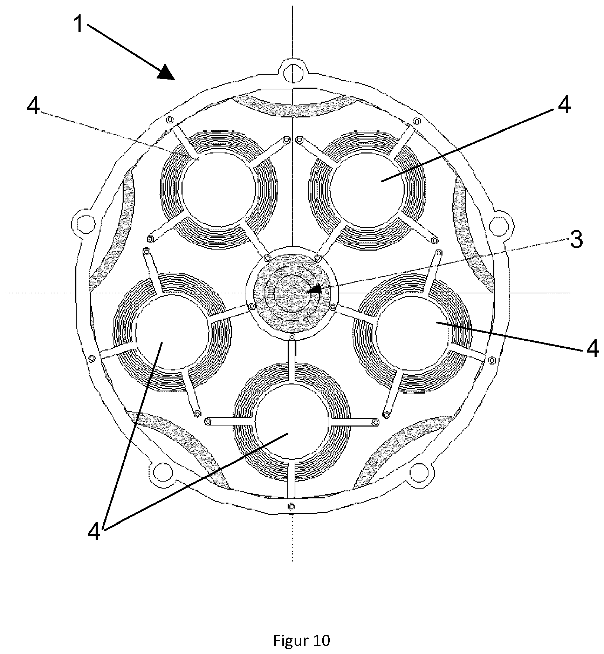

Figur 10 zeigt eine Seitenansicht des Stators 1 der in Figur 9 bis Figur 11 gezeigten Ausführungsform des erfindungsgemäßen Magnetantriebes. Der Stator 1 umfasst fünf Stator-Einzelmagnete 4, welche rotationssymmetrisch um die Antriebsachse 3 angeordnet sind. Die Stator-Einzelmagnete 4 sind jeweils gegenüberliegend den Translator-Einzelmagneten 5 angeordnet.

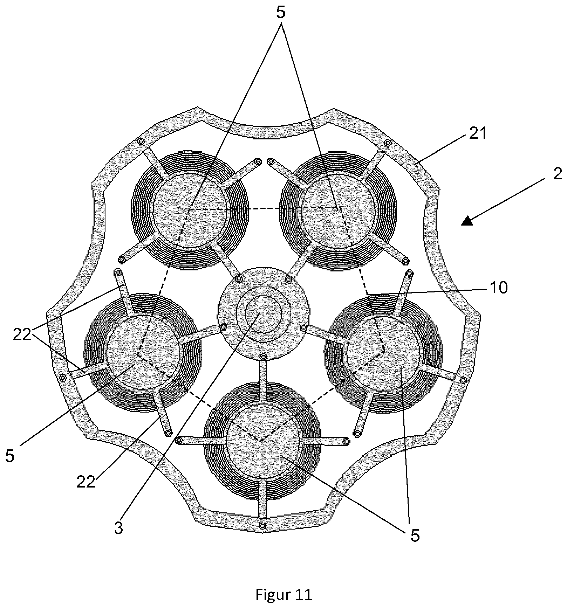

Figur 11 zeigt eine Seitenansicht des Translators 2. Der Translator 2 umfasst mehrere Translator-Einzelmagnete 5, welche um die normal auf die Betrachtungsebene verlaufende Antriebsachse 3 entlang eines Polygons 10 rotationssymmetrisch angeordnet sind. Die Translator-Einzelmagnete 5 sind einerseits an der Antriebsachse 3, andererseits an einem Translatorträger 21 durch ein Translatorlager 22 gelagert. Die Translatorlager 22 sind mit einem möglichst kleinen Querschnitt ausgebildete Stege.

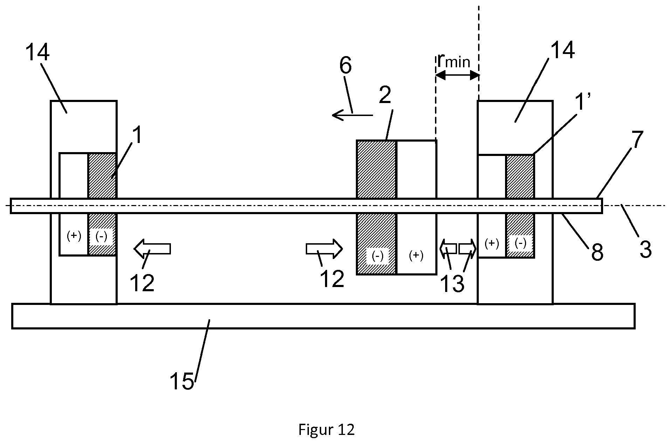

Figur 12 zeigt eine weitere Ausführungsform des erfindungsgemäßen Magnetantriebes als Widerstandselement. Der Aufbau ist prinzipiell ähnlich zu den oben geschilderten Ausführungsformen, wobei jedoch die Statoren 1,1' in Bezugnahme zum Translator 2 so gepolt sind, dass Anziehungskräfte 12 und Abstoßungskräfte 13 zwischen den Polen des Translators 2 und der Statoren 1,1' aktiviert werden. Der Translator 2 ist somit bei Beschleunigung durch eine über die Antriebsachse 3 auf den Translator 2 wirkende externe Kraft zwischen den Statoren 1,1' auf einer Wegstrecke bewegbar.

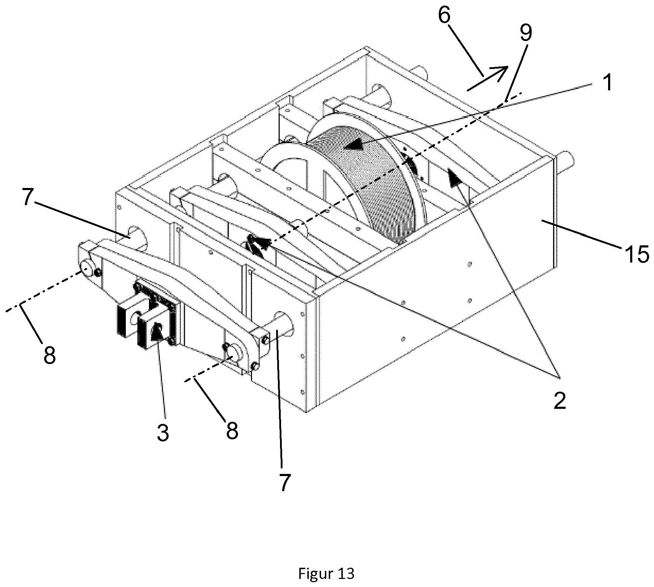

Figur 13 zeigt eine isometrische Ansicht einer weiteren Ausführungsform der erfindungsgemäßen Magnetvorrichtung. Die Magnetvorrichtung umfasst einen zwischen zwei Translatoren 2 angeordneten Stator 1, wobei der Stator 1 und die Translatoren 2 innerhalb einer zu einem Gehäuse ausgeformten Trägerkonstruktion 15 angeordnet sind. Außerhalb der Trägerkonstruktion 15 ist die Antriebsachse 3 angeordnet. Der Stator 1 und die Translatoren 2 sind entlang der Achse 9 angeordnet, durch welche Achse 9 die Translatorbewegungsrichtung 6 vorgegeben ist.

Die Translatoren 2 sind mittels zwei Führungseinheiten 7 gelagert und werden durch diese Führungseinheiten 7 getragen, wobei die Führungsachsen 8 parallel zur der Translator-Bewegungsrichtung 6 orientiert sind. Die Führungseinheiten 8 sind seitlich der Translatoren 2 angeordnet, sodass die Führungseinheiten 8 das zwischen den Translatoren 2 und dem Stator 1 wirkende Magnetfeld nicht stören.

Die Führungseinheiten 8 sind durch die Trägerkonstruktion 15 gehalten.

Die in Figur 13 gezeigte Magnetvorrichtung weist im Wesentlichen die oben erwähnten Eigenschaften auf, sofern diese auf die in Figur 13 gezeigte Vorrichtung anwendbar sind. Die Translatoren 2 sind Magnete der Güte N45. Der Stator 1 ist ein Elektromagnet umfassend einen magnetischen Kern 22 und eine den Kern 22 umwickelnde Spule 23.

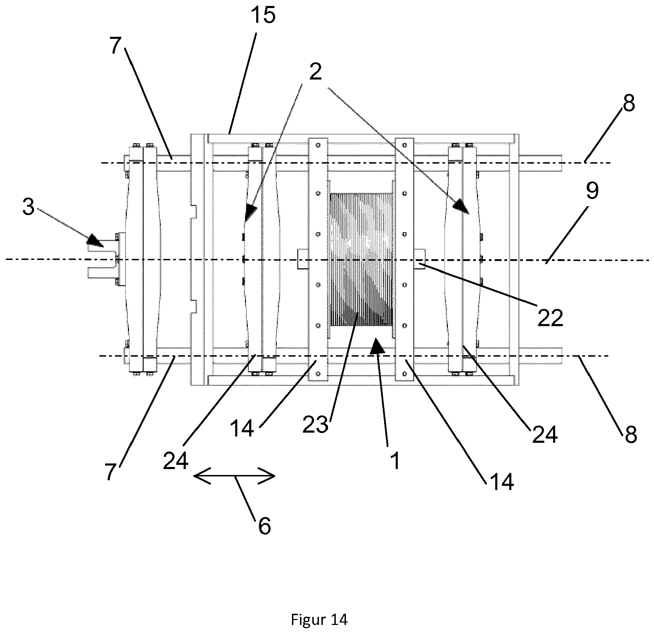

Figur 14 zeigt eine Ansicht von oben gleichsam einer Ansicht von unten der in Figur 13 gezeigten erfindungsgemäßen Magnetvorrichtung. Die oben zu Figur 13 beschriebenen Merkmale sind im Wesentlichen auf in Figur 14 ersichtlich.

Es ist in Figur 14 die Anordnung der Translatoren 2 und des Stators 1 sowie der Antriebsachse 3 entlang der Achse 9 erkennbar.

Der Stator 1 ist mittels eines Statorträgers 14 an der Trägerkonstruktion 15 gelagert. Der Kern 22 des Stators 1 erstreckt sich in Richtung der Achse 9 über die Trägerkonstruktion 15 hinaus, sodass das zwischen dem Stator 1 und den Translatoren 2 wirkende Magnetfeld nicht durch den Statorträger 14 gestört ist.

Die Form der Translatorträger 24, mittels welcher die Translatoren 2 an der Führungseinheit 7 gelagert sind, ist an die vom Fachmann erkennbare Momentenbelastung und an die durch unter anderem die oszillierende Bewegung der Translatoren 2 hervorgerufenen Schwingungskräfte angepasst.

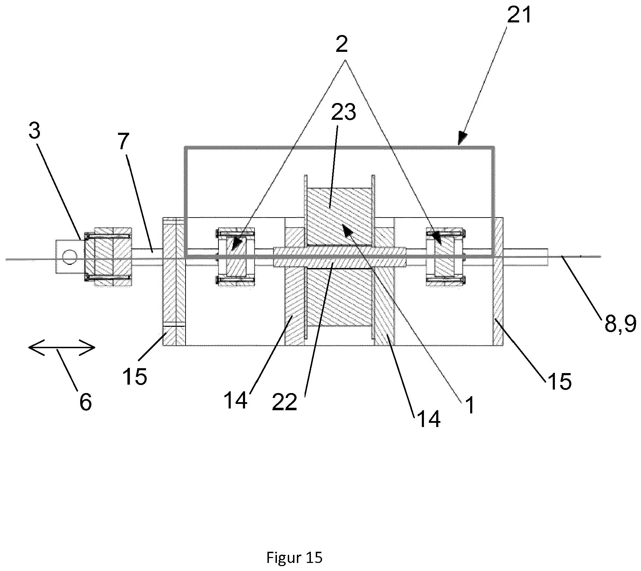

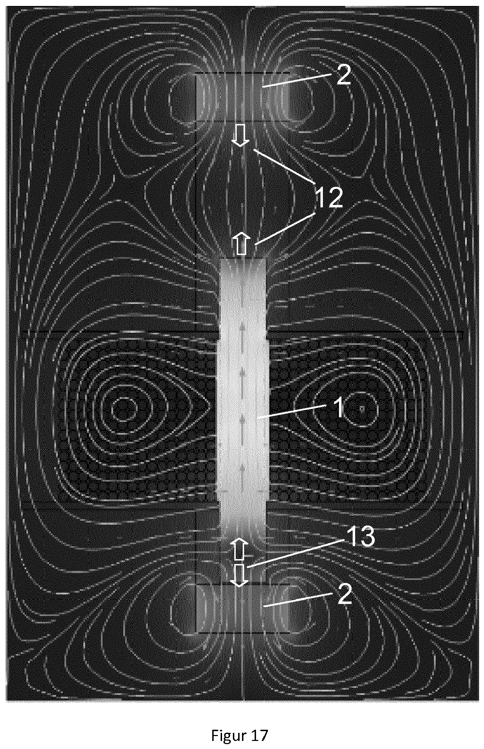

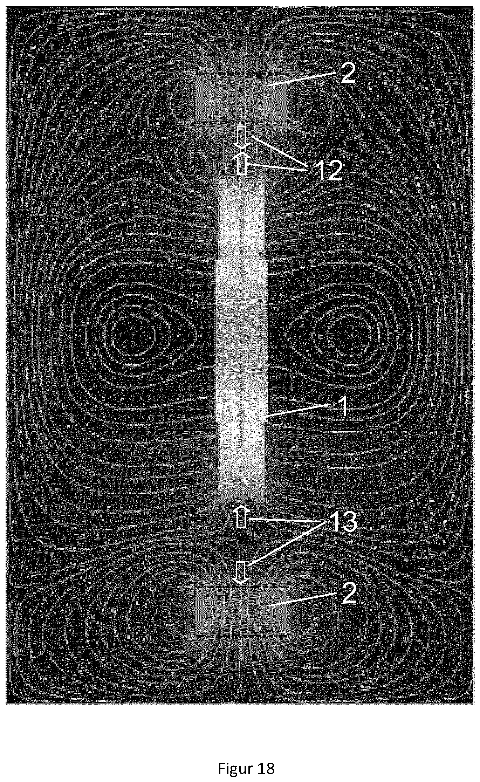

Es ist in Figur 15 ein Schnittbild der in den Figuren 13 und 14 gezeigten Magnetvorrichtung dargestellt. Zusätzlich zu den oben erwähnten Merkmalen ist ein Berechnungsbereich 21 eingetragen, für welchen mittels der Finite Elemente Methode (kurz: FEM) der Verlauf der Magentfeldstärken berechnet wurde. Um den Rechenaufwand zu minimieren, erstreckt sich der Berechnungsbereich 21 nur über eine Symmetriehälfte; die Symmetrieachse ist in Figur 15 mit der Achse 9 deckungsgleich. Die Ergebnisse der Berechnung mittels FEM (siehe Figur 17 und Figur 18) werden in den nachstehenden Absätzen diskutiert.

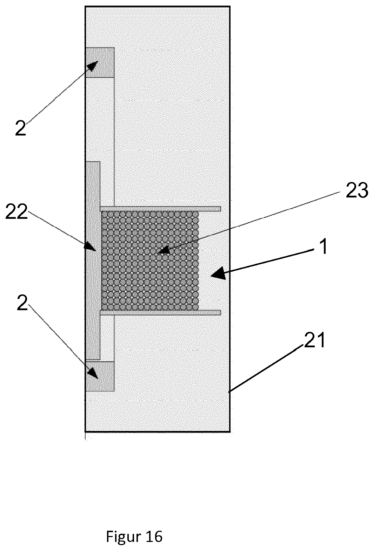

Figur 16 zeigt eine Detaildarstellung der Symmetriehälfte, welche in den Berechnungen mittels FEM beobachtet wurde. Die Symmetrieachse und die Achse 9 sind wiederum deckungsgleich. Es sind die Symmetriehälften der Translatoren 2 in Figur 16 eingetragen.

Der Stator 1 umfasst einen Kern 22 und eine Spule 23, wobei wiederum nur die jeweiligen Symmetriehälften eingetragen sind.

Es ist weiters das Berechnungsfeld 21 in Figur 16 eingetragen.

In Figur 17 und Figur 18 ist das Ergebnis der der Simulation mittels FEM dargestellt. Die FEM-Berechnung liegt der Vorgabe zu Grunde, dass der Stator als ein Elektromagnet mit 90 Ampere, die Translatoren 2 als Permanentmagnete der Güte N45 mit 1050kA/m ausgebildet sind.

In Figur 17 wird die Position des Translators 2 in einem Abstand r=1,0mm zum Stator gezeigt. Wenngleich die zwischen dem Stator 1 und dem Translator 2 wirkende Abstoßungskraft 13 den Hauptteil der auf den Translator 2 wirkenden Translationskraft ausmacht, so wird auch eine Bewegung des Translators 2' durch die zwischen dem Translator 2' und dem Stator 1 wirkende Anziehungskraft 12 bewirkt.

Figur 18 zeigt das Ergebnis der Simulation mittels FEM bei einer Position der Translatoren 2 in einem jeweils gleichen Abstand zum Stator 1.

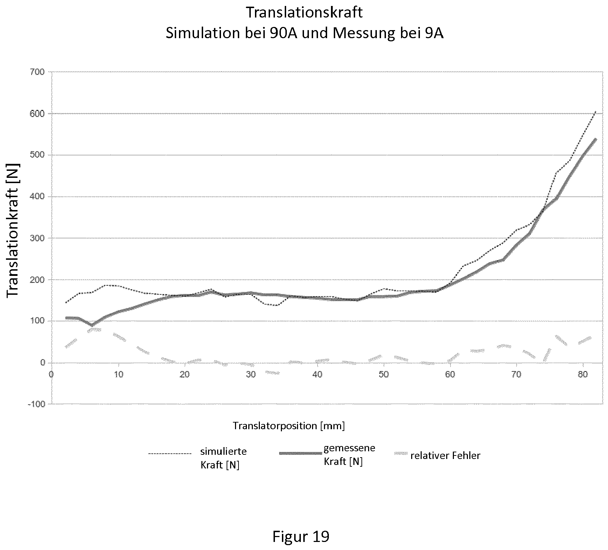

Figur 19 zeigt ein Diagramm, in welchem die mittels FEM-Simulation berechnete Translationskraft mit der an der Versuchsanlage gemessenen Translationskraft verglichen wird. Bei Messung und Simulation wurde ein Translator 2 mit einer permanenten Magnetisierung von 1050,0 kA/m in Betracht gezogen. Der Stator wurde zur Durchführung der Messung an der Versuchsanlage mit 90A beaufschlagt. Zur Durchführung der Simulation wurde eine Beaufschlagung des Stators 1 mit 9A berücksichtigt, wobei die erhaltenen Werte auf eine Beaufschlagung mit 90A hochgerechnet wurden.

Aus dem Diagramm von Figur 19 ist klar erkennbar, dass die Simulation auf Basis der oben erörterten Theorie und die Messung im Wesentlichen übereinstimmen.

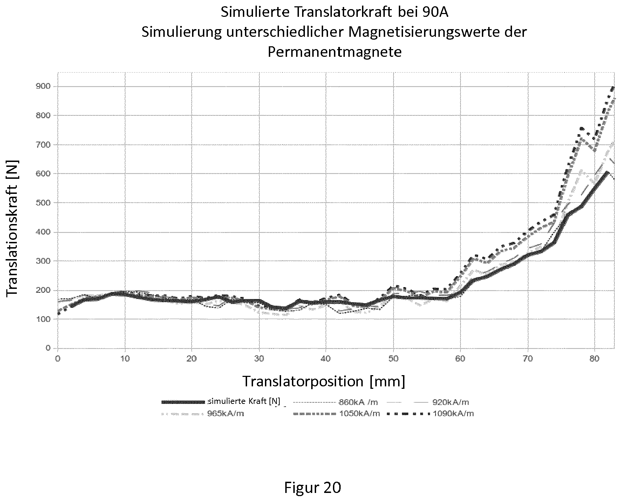

Figur 20 vergleicht die mittels FEM-Simulation in Anlehnung an die obige Theorie berechnete Translationskraft bei unterschiedlicher Magnetisierung der als Permanentmagnete ausgebildeten Translatoren 2. In dem Diagramm ist die berechnete Translationskraft auf der $\gamma$-Achse, die Position des Translators 2 auf der x-Achse aufgetragen. Anhand des Diagramms von Figur 20 ist der Einfluss der Magnetisierung der als Permanentmagnete ausgebildeten Translatoren 2 bei einer Beaufschlagung des Stators mit 9A, jedoch hochgerechnet auf eine Beaufschlagung mit 90A erkennbar. Der im Diagramm eingetragene Graph "simulierte Kraft [N]" ist eine Kurve wiedergebend den allgemeinen Verlauf der anderen Graphen des Diagramms. Der Graph "simulierte Kraft" ist auch in dem Diagramm der Figur 19 als "simulierte Kraft [N]" eingetragen.

**Patentansprüche**

1.  Magnetvorrichtung umfassend zwei Statoren (1, 1') und zumindest einen Translator (2), welcher Translator (2) relativ zu den Statoren (1, 1') entlang einer linearen Achse (9) in einer Translator-Bewegungsrichtung (6) bewegbar ist, welche Translator-Bewegungsrichtung (6) zu den Statoren hin (1, 1') gerichtet ist, wobei die Statoren (1, 1') und der Translator (2) entlang der Achse (9) angeordnet sind,
    **dadurch gekennzeichnet, dass**
    die Magnetvorrichtung eine Steuervorrichtung umfasst, welche Steuervorrichtung eine Vorrichtung zur Steuerung eines Abstandes r>0 zwischen den den Statoren (1, 1') zugewandten Oberflächen des Translators (2) und der dem Translator (2) zugewandten Oberfläche des jeweiligen Stators (1,1') bei Betrieb der Magnetvorrichtung in Bezug auf den sich zwischen Stator (1,1') und Translator (2) ergebenden Kräftezustand zur Wahrung der Wirkung des Stators (1,1') und des Translators (2) als einzelne Magnete umfasst, wobei der minimale Abstand $r_{min}$>0 durch eine Steuereinheit unter Bezugnahme auf den sich zwischen dem Stator (1) und dem Translator (2) einstellenden Kräftezustandes so gesteuert wird, dass ein auf den Translator (2) wirkender resultierender Kraftzustand bei einer Position $X_t$ des Translators (2) ein Maximum ist, wobei für den auf den Translator (2) wirkenden Kräftezustand unter Annahme einer zylindrischen Geometrie folgende Beziehung gilt:

$$F_{repulsion}(X_t) = \frac{\mu_0}{4\pi} \left\{ \left[ \frac{q_{s1a}(X_t)q_{tb}(X_t)}{\left(X_t + \frac{L_s + L_t}{2}\right)^2} + \frac{q_{s1b}(X_t)q_{ta}(X_t)}{\left(X_t - \frac{L_s + L_t}{2}\right)^2} \right] - \left[ \frac{+q_{s1a}(X_t)q_{ta}(X_t)}{\left(X_t + \frac{L_s - L_t}{2}\right)^2} + \frac{q_{s1b}(X_t)q_{tb}(X_t)}{\left(X_t + \frac{L_t - L_s}{2}\right)^2} \right] \right\}$$

mit

- $q_{s1a}(X_t)$ und $q_{s1b}(X_t)$ als die magnetische Polstärke der Statoren (1,1'),
- $q_{ta}(X_t)$ und $q_{tb}(X_t)$ als die magnetische Polstärke des Translators (2),

$$X_t \in ]\frac{L_s + L_t}{2}; \delta + \frac{L_s + L_t}{2}[$$

- als die Position $X_t$ des Translators (2),
- $\delta = d - L_s - L_t$ als die Translatorwegstrecke mit d als die Distanz zwischen den Zentren der Statoren (1,1'),
- $L_s$ als die Länge der Statoren (1,1') in Richtung der Achse (9),
- $L_t$ als die Länge des Translators (2) in Richtung der Achse (9).

**2.** Magnetvorrichtung nach Anspruch 1, **dadurch gekennzeichnet, dass** Stator-Einzelmagnete (4) an den Statoren (1,1') und/oder Translator-Einzelmagnete (5) am Translator (2) entlang einer ein Polygon (10) beschreibenden Linie um eine zu der Translator-Bewegungsrichtung (6) parallel orientierten Polygonachse angeordnet sind.

**3.** Magnetvorrichtung nach einem der Ansprüche 1-2, **dadurch gekennzeichnet, dass** der Translator (2) durch zumindest eine Führungseinheit (7) relativ zu den Statoren (1,1') beweglich gelagert ist, wobei die Führungsachse (8) der Führungseinheit (7) die Statoren (1,1') in einem Bereich zwischen zwei unmittelbar benachbarten Stator-Einzelmagneten (4) und den Translator (2) in einem Bereich zwischen zwei unmittelbar benachbarten Translator-Einzelmagneten (5) schneidet.

**4.** Magnetvorrichtung nach einem der Ansprüche 1-3, **dadurch gekennzeichnet, dass** die Bewegung des Translators (2) relativ zu den Statoren (1,1') eine oszillierende Bewegung ist.

**5.** Magnetvorrichtung nach einem der Ansprüche 1-4, **dadurch gekennzeichnet, dass** die Steuervorrichtung ein zwischen den Statoren (1,1') und dem Translator (2) positionierbares Distanzelement umfasst.

**6.** Magnetvorrichtung nach einem der Ansprüche 1-5, **dadurch gekennzeichnet, dass** die Steuervorrichtung ein die Bewegung des Translators (2) begrenzendes mechanisches Zwangssystem umfasst.

**7.** Magnetvorrichtung nach einem der Ansprüche 1-6, **dadurch gekennzeichnet, dass** die Steuervorrichtung eine Distanzmessvorrichtung und/oder eine Zeitmessvorrichtung umfasst, mittels welcher Steuervorrichtung in Abhängigkeit der Position des Translators (2) relativ zu den Statoren (1,1') und/oder in Abhängigkeit einer Zeitperiode die Polarisation des Stators (1,1') und/oder des Translators (2) und/oder die Feldstärke den Statoren (1,1') und/oder des Translators (2) änderbar ist.

**8.** Magnetvorrichtung nach einem der Ansprüche 1-7, **dadurch gekennzeichnet, dass** ein sich zwischen jeden den Statoren (1,1') und dem in der Position mit dem größten Abstand d jeweiligen Stator (1,1) befindlichen Translator (2) erstreckendes Volumen ein Vakuum ist.

**Claims**

**1.** A magnetic device comprising two stators (1, 1') and at least one translator (2), said translator (2) being movable in relation to said stators (1, 1') along a linear axis (9) in a translator moving direction (6), said translator moving direction (6) being oriented towards said stators (1, 1'), wherein said stators (1, 1') and said translator (2) are arranged along said axis (9); **characterized in that**

said magnetic device comprises a control device, said control device comprising a device for controlling, during the operation of the magnetic device, a distance r>0 between the surfaces of the translator (2) that face the stators (1, 1') and the surface of the respective stator (1, 1') that faces the translator (2), based on the force state created between the stators (1, 1') and the translator (2), to ensure that the stators (1, 1') and the translator (2) act as individual magnets, wherein the minimum distance $r_{min}$>0 is controlled by a control unit based on the force state generated between the stator (1) and the translator (2) in such a way that the resulting force state acting on the translator (2) at a position $X_t$ of the translator (2) is a maximum, wherein, assuming a cylindrical geometry, the force state acting on the translator (2) is defined by the following relation:

$$F_{repulsion}(X_t) = \frac{\mu_0}{4\pi} \left\{ \left[ \frac{q_{s1a}(X_t)q_{tb}(X_t)}{\left(X_t + \frac{L_s + L_t}{2}\right)^2} + \frac{q_{s1b}(X_t)q_{ta}(X_t)}{\left(X_t - \frac{L_s + L_t}{2}\right)^2} \right] - \left[ + \frac{q_{s1a}(X_t)q_{ta}(X_t)}{\left(X_t + \frac{L_s - L_t}{2}\right)^2} + \frac{q_{s1b}(X_t)q_{tb}(X_t)}{\left(X_t + \frac{L_t - L_s}{2}\right)^2} \right] \right\}$$

wherein

- $q_{s1a}(X_t)$ and $q_{s1b}(X_t)$ are the magnetic pole strengths of the stators (1, 1'),
- $q_{ta}(X_t)$ and $q_{tb}(X_t)$ are the magnetic pole strengths of the translator (2),
- $X_t \in \left] \frac{L_s + L_t}{2} ; \delta + \frac{L_s + L_t}{2} \right[$ is the translator's (2) position $X_t$,
- $\delta = d - L_s - L_t$ is the distance covered by the translator's movement, wherein $d$ is the distance between the centers of the stators (1, 1'),
- $L_s$ is the length of the stators (1, 1') in the direction of the axis (9),
- $L_t$ is the length of the translator (2) in the direction of the axis (9).

2. The magnetic device according to claim 1, **characterized in that** individual stator magnets (4) at the stators (1, 1') and/or individual translator magnets (5) at the translator (2) are arranged along a line describing a polygon (10) around a polygon axis which is oriented in parallel to the translator moving direction (6).

3. The magnetic device according to any of the claims 1 to 2, **characterized in that** the translator (2) is movably mounted in relation to the stators (1, 1') by means of at least one guiding unit (7), wherein a guiding axle (8) of the guiding unit (7) intersects the stators (1, 1') in an area between two adjacent individual stator magnets (4) and the translator (2) in an area between two adjacent individual translator magnets (5).

4. The magnetic device according to any of the claims 1 to 3, **characterized in that** the translator's (2) movement in relation to the stators (1, 1') is an oscillating movement.

5. The magnetic device according to any of the claims 1 to 4, **characterized in that** the control device comprises a spacer element which may be positioned between the stators (1, 1') and the translator (2).

6. The magnetic device according to any of the claims 1 to 5, **characterized in that** the control device comprises a system exercising a mechanical constraint restricting the translator's (2) movement.

7. The magnetic device according to any of the claims 1 to 6, **characterized in that** the control device comprises a distance measuring device and/or a time measuring device, by means of which the polarization of the stators (1, 1') and/or the translator (2) and/or the field strength of the stators (1, 1') and/or of the translator (2) may be changed depending on the position of the translator (2) in relation to the stators (1, 1') and/or depending on a period of time.

8. The magnetic device according to any of the claims 1 to 7, **characterized in that** a volume extending between each stator (1, 1') and the translator (2), when the translator is situated at the farthest distance d from each stator (1, 1'), is a vacuum.

**Revendications**

1. Dispositif magnétique comprenant deux stators (1,1') et au moins un translateur (2), ledit translateur (2) pouvant être déplacé par rapport auxdits stators (1,1') sur un axe linéaire (9) dans une direction de mouvement (6) du translateur, ladite direction de mouvement (6) du translateur étant orientée vers lesdits stators (1,1'), lesdits stators (1,1') et ledit translateur (2) étant arrangés sur l'axe (9),

   **caractérisé en ce que**

   ledit dispositif magnétique comprend un dispositif de commande, ce dispositif de commande comprenant un dispositif pour contrôler, lors du fonctionnement du dispositif magnétique, une distance r > 0 entre les surfaces du translateur (2) faisant face aux stators (1,1') et les surfaces correspondantes des stators (1,1') faisant face au translateur (2) en fonction de l'état de force régnant entre les stators (1,1') et le translateur (2) afin d'assurer que les stators (1,1') et le translateur (2) se comportent comme des aimants individuels,

   dans lequel la distance minimale $r_{min} > 0$ est contrôlée par une unité de commande en fonction de l'état de force régnant entre les stators (1,1') et le translateur (2) de sorte que l'état de force résultant agissant sur le translateur (2) à une position $X_t$ du translateur (2) soit un maximum, l'état de force agissant sur le translateur (2), en supposant une géométrie cylindrique, étant défini par la relation suivante:

$$F_{repulsion}(X_t) = \frac{\mu_0}{4\pi} \left\{ \left[ \frac{q_{s1a}(X_t)q_{tb}(X_t)}{\left(X_t + \frac{L_s + L_t}{2}\right)^2} + \frac{q_{s1b}(X_t)q_{ta}(X_t)}{\left(X_t - \frac{L_s + L_t}{2}\right)^2} \right] - \left[ +\frac{q_{s1a}(X_t)q_{ta}(X_t)}{\left(X_t + \frac{L_s - L_t}{2}\right)^2} + \frac{q_{s1b}(X_t)q_{tb}(X_t)}{\left(X_t + \frac{L_t - L_s}{2}\right)^2} \right] \right\}$$

   où

   - $q_{s1a}(X_t)$ et $q_{s1b}(X_t)$ sont les intensités des pôles magnétiques des stators (1,1'),
   - $q_{ta}(X_t)$ et $q_{tb}(X_t)$ sont les intensités des pôles magnétiques du translateur (2),
   - $X_t \in \left] \frac{L_s + L_t}{2} ; \delta + \frac{L_s + L_t}{2} \right[$ est la position $X_t$ du translateur (2),
   - $\delta = d - L_s - L_t$ est la distance parcourue par le translateur (2), d étant la distance séparant les centres des stators (1,1'),
   - $L_s$ est la longueur des stators (1,1') dans la direction de l'axe (9),
   - $L_t$ est la longueur du translateur (2) dans la direction de l'axe (9).

2. Dispositif magnétique selon la revendication 1, **caractérisé en ce que** des aimants individuels de stator (4) sur les stators (1,1') et/ou des aimants individuels de translateur (5) sur le translateur (2) sont disposés sur une ligne décrivant un polygone (10) autour d'un axe de polygone orienté parallèlement à la direction de mouvement (6) du translateur.

3. Dispositif magnétique selon l'une des revendications 1 à 2, **caractérisé en ce que** le stator est monté de façon mobile par rapport aux stators (1,1') au moyen d'au moins une unité de guidage (7), l'axe de guidage (8) de l'unité de guidage (7) croisant les stators (1,1') dans une zone entre deux aimants individuels de stator (4) adjacents et le translateur (2) dans une zone entre deux aimants individuels de translateur (5) adjacents.

4. Dispositif magnétique selon l'une des revendications 1 à 3, **caractérisé en ce que** le mouvement du translateur (2) par rapport aux stators (1,1') est un mouvement oscillant.

5. Dispositif magnétique selon l'une des revendications 1 à 4, **caractérisé en ce que** le dispositif de commande comprend un élément d'écartement pouvant être disposé entre les stators (1,1') et le translateur (2).

6. Dispositif magnétique selon l'une des revendications 1 à 5, **caractérisé en ce que** le dispositif de commande comprend un système exerçant une contrainte mécanique qui restreint le mouvement du translateur (2).

7. Dispositif magnétique selon l'une des revendications 1 à 6, **caractérisé en ce que** le dispositif de commande comprend un dispositif de mesure de distance et/ou un dispositif de chronométrage permettant de modifier la polarisation des stators (1,1') et/ou du translateur (2) et/ou l'intensité du champ des stators (1,1') et/ou du translateur (2) en fonction de la position du translateur (2) par rapport aux stators (1,1') et/ou en fonction d'un intervalle de temps.

8. Dispositif magnétique selon l'une des revendications 1 à 7, **caractérisé en ce qu'**un volume compris entre chaque stator (1,1') et le translateur (2), lorsque le translateur (2) est situé dans la position la plus éloignée d de chaque stator (1,1'), est un vide.

Figur 1

Figur 2

Figur 3a

Figur 3b

Figur 3c

Figur 4

Figur 5

Figur 6

Figur 7

Figur 8

Figur 9

Figur 10

Figur 11

Figur 12

Figur 13

Figur 14

Figur 15

Figur 16

Figur 17

Figur 18

Translationskraft
Simulation bei 90A und Messung bei 9A

Figur 19

Simulierte Translatorkraft bei 90A
Simulierung unterschiedlicher Magnetisierungswerte der
Permanentmagnete

Figur 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006325381 B
- JP 2006345652 B
- US 20060049701 A
- JP 2010104078 B
- RO 126256
- JP 2002335662 B

- DE 10003928
- DE 10207828 A1
- WO 2007063222 A1
- DE 202009014192 U1
- US 20040005222 A